# EUROPEAN PATENT APPLICATION

(11) **EP 1 215 606 A1**
(43) Date of publication of application: **19.06.2002**
(21) Application number: 01310037.5
(22) Date of filing: 30.11.2001
(51) Int. Cl.: G06F 17/60

(54) **Supply management system**

(30) Priority: 13.12.2000 GB 0030422; 08.03.2001 GB 0105744
(71) Applicant: ITT MANUFACTURING ENTERPRISES, INC., Wilmington, Delaware 19801 (US)
(72) Inventor: Aram, Paul Richard, Ealing, London W13 9AS (GB)
(74) Representative: Martin, Philip John

(57) **Abstract**

The invention generally relates to systems for the acquisition, supply and management of goods and/or parts for goods. More particularly it relates to data processing systems and methods for facilitating the provision of goods or parts from a manufacturer or distributor (204) to its customers (200), where the manufacturer is supplied by one or more suppliers (202).

In an embodiment of the invention a data processing system comprises: a stock level data store for storing stock level data for a stock item or part comprising current stock level data, stock demand data and stock replenishment data; a program store storing code for a processor; and a processor (218), coupled to the data store for accessing the stored data and coupled to the program store for implementing the stored program code; the code comprising code for: calculating predicted stock level data using the current stock level data, the stock replenishment data and the stock demand data, said predicted stock level data comprising a date and/or time and a predicted number of stock units available for meeting a demand for the stock item or part at said date and/or time; and graphically displaying changes in the predicted stock level data over a future period of time.

The data processing system assists a supplier in planning inventory management, allows a supplier to predict when there is a risk of letting a customer down, and allows a supplier to estimate the effect of a batch of work-in-progress not being completed on time.

## Description

This invention generally relates to systems and methods for managing the acquisition and supply of goods and/or services and for demand planning. The invention is particularly concerned with the electronic management of procurement using a communications network such as the Internet.

It is known to operate a "demand pull" parts supply arrangement in a just in time manufacturing process. In such an arrangement, a batch of parts is supplied to a production line in a so-called "kanban". The kanban is positioned on the production line where the parts are needed and a second batch of parts is provided behind the first in a second kanban. When the first kanban is empty it is returned to the supplier and the second kanban moves forward to take its place. At the same time an electronic data interchange (EDI) signal is sent to the parts supplier as notification that all the parts in the first kanban have been used. The kanbans may contain individual parts or pre-assembled sub-assemblies. Typically, the manufacturer requires that parts are delivered to the production line in a very short space of time, for example two to three hours. In a demand pull system, the manufacturer automatically orders stock from the supplier in anticipation of its use, and specifically requires the delivery of a specified quantity of parts at a specified date, time and place.

Such a demand pull system works well for large-scale, uniform manufacturing processes where there is a relatively predictable demand. However, it is not well suited to manufacturing processes which produce small batches of different types of product, among other reasons because the parts suppliers must hold large quantities of stock and because of delays caused by EDI transmission and resource planning. More fundamentally, the system provides only one-way information flow, from the manufacturer to the supplier.

In another manufacturing resource planning system (MRP), a customer ordering a part is offered immediate delivery if the part is in stock and is otherwise offered a preset lead time. In a more sophisticated system, strategic planners use the level of goods in stock and data relating to other orders for the part to estimate a date by which goods or parts should be available; this date is typically governed by the component with the longest manufacturing or delivery lead time. Estimating a delivery date in this MRP system is complex and, again, requires a large inventory of stock to keep lead times low.

Where a manufacturer or distributor provides goods to a customer, it is desirable to be able to offer a short delivery time to satisfy the customer whilst at the same time not needing to maintain a large stock of the goods. This would allow the supplier to operate efficiently and, as a consequence, to be able to offer lower prices. Other general desiderata are, from a customer perspective, to provide a faster delivery of goods at a lower cost, and from a supplier perspective, to facilitate improved planning ahead, particularly where there is a risk of short-notice demand spikes. From a more technical perspective, there is a need to improve the information flow between the customer, supplier and manufacturer/distributor. There is therefore a need for an improved suppply and demand management tool in order to facilitate progress towards these aims.

According to a first additional aspect of the invention there is therefore provided a data processing system comprising: a stock level data store for storing stock level data for a stock item or part comprising current stock level data, stock demand data and stock replenishment data; a program store storing code for a processor; and a processor, coupled to the data store for accessing the stored data and coupled to the program store for implementing the stored program code; the code comprising code for: calculating predicted stock level data using the current stock level data, the stock replenishment data and the stock demand data, said predicted stock level data comprising a date and/or time and a predicted number of stock units available for meeting a demand for the stock item or part at said date and/or time; and graphically outputting changes in the predicted stock level data over a future period of time. The graphical output preferably comprises a graphical display.

The data processing system assists a supplier in planning inventory management, allows a supplier to predict when there is a risk of letting a customer down, and allows a supplier to estimate the effect of a batch of work-in-progress not being completed on time. More particularly, despite the large quantity of relatively complex data underlying the graphical presentation of the predicted stock level, a supplier is able to appreciate at a glance whether the stock level of a part held by the distributor is likely to fall below a safety stock level or, worse, below a zero stock level which would result in customer orders being unfulfilled. The supplier is then able to take action to avert such undesirable consequences.

A distributor or manufacturer (where an internal work unit of the manufacturer may be considered the supplier) has access to the same data view as the supplier or suppliers and is thus able to exercise independent managerial control. The stock replenishment data which may for example comprise purchase orders and/or working progress, may be entered either by the distributor (for example, in the case of a purchase order) or by a supplier (for example for working progress). For supplier-entered data the system also allows the distributor or other intermediary to monitor that supplier data has been entered correctly, for example by sampling.

For a customer the data processing system allows stock takers and availability to be viewed via to placing an order. The customer is also presented with a simple, user-friendly window on relatively complex data, a form of a graphical presentation allowing the customer to confirm that their orders have been logged into the system by visual inspection. The customer can also see what actions are being taken by the manufacturer/distributor to ensure that their order will be fulfilled - that is the customer can see details of purchase or work orders including dates and quantities.

In one embodiment the stock replenishment data comprises work-in-progress data for a stocked item indicating, for one or more batches of work-in-progress, a quantity of items being manufactured (or purchased) and an expected date at which the work-in-progress should be complete so that the items are available for use. Preferably the predicted stock level sums the cumulative work-in-progress up to the future time, but preferably excludes work-in-progress which is, or is predicted to be overdue. Preferably the stock demand data comprises order data for a stocked item, and in one embodiment comprises a cumulative sum of numbers of the item which have been promised to customers, in response to customer orders, by the future time.

Preferably the system also provides a warning, such as an e-mail warning, to a supplier and optionally to an intermediary such as a manufacturer and/or distributor, to indicate when the predicted stock level will fall below a safety threshold or behold zero. In some embodiments of the system the stock level data store stores data relating to stock levels and both an intermediary such as a manufacturer/distributor and at a supplier. In this way the manufacturer's/distributor's warehouses are effectively extended to include supplier held stock, which presents a more realistic picture of actual item or part availability. This has the benefit that safety stock levels and thresholds can be reduced to the benefit of all parties in the supply chain. The stock level data store may also, optionally, store data relating to working progress at the supplier (or manufacturer's work unit) and, in some embodiments, stock in-transit data which can be used to take account of the shipping time for shipping stock from a supplier to the intermediary to meet a customer order.

In another aspect, the invention provides an item or part supply planning method for assisting identification of a potential date and/or time at which there is a risk of a level of stock of the item or part falling below a threshold value, the method comprising: reading initial stock level data from a data store, the initial stock level data comprising data indicating an initial stock quantity of the item or part; reading customer demand data from a data store, the customer demand data comprising data indicating at least one order for a demanded quantity of the item or part and a corresponding date and/or time for meeting the order; reading stock replenishment data from a data store, the stock replenishment data comprising data indicating at least one stock replenishment event increasing a stocked quantity of the item or part at a corresponding date and/or time; calculating a cumulative item or part demand at a future data and/or time by summing demanded quantities data of the item or part preceding said future date/time; calculating a cumulative stock level at a future data and/or time by summing said initial stock quantity and increases in stocked quantity of said item or part preceding said future date and/or time; calculating a predicted level of stock by subtracting said cumulative item or part demand from said cumulative stock level; repeating said predicted level of stock calculation for a plurality of different future dates and/or times; and graphically outputting a plurality of predicted levels of stock for a corresponding plurality of different future dates and/or times. The graphical output preferably comprises a graphical display.

The "reading" steps may be performed in any order, and the order of the first two "calculating" steps may be reversed. The initial stock level, demand and replenishment data may, in alternative embodiments, be input by a user rather than read from a data store.

In the data processing system, the code preferably comprises code for a customer interface to the data store, which is accessible by the customer for entering customer orders. Preferably the code also comprises supplier interface to the data store, which is accessible by the supplier for entering supplier data such as supplier stock level and work-in progress data. The customer interface operates to receive a request for an item from the customer and to receive from the customer and store in the data store order data for the requested item. The supplier interface operates to receive from the supplier and store in the data store an indication of the level of stock of an item or a part for the item, and to output customer order data for the item to the supplier.

Preferably the manufacturer or distributor has a terminal for access to information relating to both customer orders and the supplier's stock. The data may be arranged conventionally, with fields and records, and the data store is typically organised as a relational database having two or more ports or windows (for the distributor and/or customer and/or supplier). This provides the customer with access to information from the supplier regarding the distributor's and/or supplier's stock, and the supplier with access to information from the distributor relating to customer orders from the distributor. This symmetrical database access and two-way data flow provides significant benefits, as outlined below.

For convenience, reference will be made to a system for the distribution of items or, equivalently goods or parts, but the described arrangements are equally applicable to the manufacture of the items, goods, products, parts, sub-assemblies and the like. Likewise, a customer may be a paying or non-paying, internal or external customer of the manufacturer, distributor or supplier.

In an embodiment, the data store also stores a list of supplier's inventory by location, accessible via an item or part identifier, normally an item number. This is visible to the intermediary, so that the intermediary can promise items to a customer based, at least in part, upon the supplier's stock rather than solely upon the distributor's stock. The data store may also comprise a "demand schedule" listing a series of orders and corresponding due dates which have been accepted by the distributor. Thus, a supplier is able to see what items have been promised to customers by what dates and can thus schedule their item or item parts provision to the distributor accordingly. Normally the scheduling is arranged to provide a minimum stock at the distributor, with a safety level of stock being held at the supplier.

The manufacturer or distributor may thus operate an improved "just in time" manufacturing or distribution system in which items for onwards shipment to a customer or parts for the items, remain for a minimal time in the physical possession of the manufacturer/distributor.

The manufacturer or distributor also benefits through the ability to significantly reduce the level of inventory it holds, for example to less than 5%, or even to less than 3% of sales. Moreover, this inventory reduction is not at the expense of increased lead time and the system in fact permits significantly shorter lead times for component delivery.

The arrangement also benefits the supplier because the supplier need no longer be taken by surprise by a large order, since the supplier can be via customer order information at the same time as an order is confirmed. Thus, the supplier can schedule their item or part acquisition and manufacturing processes to optimally meet the known customer demand.

Finally, the customer benefits because the efficiency of the supply chain reduces overheads, allowing lower prices to be offered to the customer, as well as shortened delivery times. The technical configuration of the database also permits a number of supply chain related activities to be streamlined and simplified including, for example, the provision of a capability for on-line self-invoicing.

It is also preferable that the data store is configured for indicating a due date or time together with an expected stock level, to take account of work-in-progress (WIP) at the supplier. Thus, data store may indicate that a particular lot or batch of items or parts will be available to a customer by the date at which their manufacture is expected to be complete. Taking account of such work-in-progress as this again helps to optimise the supply chain and reduce both the level of stock and the time for which it is held.

Preferably, the data store is further configured for indicating a due date or time when a lot or batch of items or parts is expected to arrive at the intermediary. This allows the transit time between the supplier and intermediary to likewise be taken into account when making an offer to supply items to a customer.

In a preferred embodiment, the customer interface further comprises means to receive a data and/or time the customer indicating by when the item is desired, and, optically, means to confirm a customer order.

In an embodiment where the intermediary is a manufacturer and the supplier supplies parts of items, the data store stores an indication of the level of stock of parts of the item held by the supplier. The supplier interface is then implemented to receive and store in the data store an indication of the level of stock of parts of an item held by the supplier. The customer interface may then be implemented to output offer data for making an offer in dependence upon the time to manufacture an item using a supplied part.

In a preferred embodiment, the computer system also includes stock loading code or a stock loading application for a supplier to enter their stock inventory data. The data store into which the inventory data is loaded may informally be termed a "supplier's warehouse". Similarly, the data store for distributor's inventory data may be termed a (virtual) "distributor's warehouse". Preferably, each new batch of items or parts loaded onto the system is given an identifying number, referred to as a lot number.

It is further preferred that the system includes a stock transfer application for moving lots of stock between locations in the supplier's warehouse and also for logging the movement of stock out of the supplier's warehouse into some other location such as into an in-transit location and/or into a distributor or customer location.

The system preferably also includes an invoicing application to allow a supplier to invoice the distributor for items or parts received. In such a system, once the first system user or manufacturer/distributor has confirmed that a lot or batch of items has been received, for example, by updating the batch or lot location, the invoicing application allows the second system user or supplier to transmit an invoice request to the computer system, for checking and validation, before confirmation of the invoice to the supplier.

The above embodiments have been discussed with reference to a single supplier, but in practice there will normally be a plurality of such suppliers. It is therefore preferable to restrict access to the computer system using an access control system, to allow each supplier to log separately onto the system, for example, using a password and user identification means, such as, a digital certificate. It is then convenient to manage access to the database by providing each supplier with a unique set of item or part numbers associated with items or parts that that supplier only provides to the manufacturer/distributor/customer. In some cases, however, it may be desirable to allow two or more suppliers to share some item or part numbers.

The computer system may communicate with the intermediary and/or customer and/or supplier(s) by any convenient communication means, but the system is particularly suited to implementation over an electronic communications network employing an internet protocol, such as an intranet or extranet communications network or the Internet or World Wide Web. In this case, the software applications may comprise or consist of instruction codes for web data pages, such as HTML (Hyper Text Markup Language) code, XML (Extensible Markup Language) code, and/or Java, ActiveX (trademark) or Per1 code or scripts in other programming languages.

In another aspect, the invention provides a method for facilitating customer ordering of items from an intermediary such as a manufacturer or distributor. The method uses the data processing system described above. A predicted level of stock of an item or of a part for an item is calculated and when a request for the item is received from the customer offer data is output for making an offer to supply the requested item to the customer based upon the predicted level of stock of the item or a part for the item. Broadly speaking, the method provides corresponding benefits to those described above.

According to a further aspect of the invention there is provided a supply management terminal for a manufacturer, distributor, customer and/or supplier, the terminal comprising means to retrieve from a data store stock level data for a stock item or part comprising current stock level data, stock demand data and stock replenishment data means to determine predicted stock level data using the current stock level data, the stock replenishment data and the stock demand data, said predicted stock level data comprising a date and/or time and a predicted number of stock units available for meeting a demand for the stock item or part at said date and/or time and means to graphically output, using the terminal, changes in the predicted stock level data over a future period of time. The graphical output preferably comprises a graphical display. In another aspect, the invention provides a supply system terminal for notifying a supplier of items or parts of items, as described above.

The means referred to may all be software such as program code and/or instruction code for internet/web data pages in HTML, XML, Java or similar. Generally speaking, they will each comprise coded instructions for a computer and may be separate applications or parts of a single program. The supplier may manufacture or buy in the supplied items or parts. The items or parts may be individual components, sub-assemblies, or completed goods or products in themselves. The terminal is suitable for operation with the above described computer system for the acquisition of items or parts thereof.

The terminal may provide supplier visibility of a demand schedule comprising at least one order for demand for supply of the identified item or part, thus allowing the supplier to plan ahead. In an embodiment of the terminal, the item or part is supplied to a remote intermediary user of the supply system, such as a manufacturer or distributor, in response to an order for the item(s) or part(s) placed with the intermediary user by a customer.

Advantageously the demand schedule includes an indication of the level of stock of the item or part held by the intermediary user, so that the supplier can take this into account when planning to meet the customer demand. Preferably, an order on the demand schedule includes a request for a specified number of items or parts and a corresponding due date/time by when these should be available. It is also preferable that the demand schedule has provision for including a forecast number of items or parts required and the corresponding due date, so that an order which it is known will be made, but which has not been logged onto the remote system, can be notified to a supplier. Preferably, the demand schedule also includes entries indicating an available number of the identified item or part at a corresponding date.

Normally, the demand schedule will comprise a plurality of orders which can be sorted by due date and, if desired, bucketed or binned into groups of orders having a range of due dates. Preferably, the demand schedule further comprises information indicating a safety level of stock held by the supplier, an actual total level of stock held by the supplier, a level of stock in transit between the supplier and an intermediary user, of the supply system such as a distributor, a total number of the identified items or parts requested from the intermediary user of the supply system, and/or a number of items or parts requested from the supplier to the intermediary user, for example, by means of a purchase order from the intermediary user.

In an embodiment, the demand schedule comprises a list of orders each indicating a number of items or parts required and a due date where supplier stock level information is entered and stored. This supplier stock level information may comprise, for an identified item or part, a batch or lot number, an associated number of available items or parts, and, optionally, a location which, as described above, may include a work in progress location together with an associated item or part available date.

Preferably, the terminal also includes stock level input means and stock transfer means as described above, together with a self-invoicing application. Again, the supply system terminal is particularly suited to use with a communications network such as an internet, intranet, or extranet. Thus, the terminal may comprise a general purpose computer when programmed with an appropriate set or sets of coded instructions.

According to another aspect of the invention, there is provided a method of operating a terminal corresponding to the terminal described above. Again, this method may be embodied in suitable computer program code.

According to a further aspect of the invention, there is provided an ordering terminal for a customer to order items from a manufacturer or distributor. The terminal comprises means to provide graphical output according to aspects of the invention. In a preferred embodiment, the ordering terminal also comprises means to select one of a set of projects available for ordering against at the manufacturer/distributor. The terminal may then restrict the ordering of items to only those items associated with the selected project. This reduces the possibility of items being ordered in error. For similar reasons, and to prevent abuse of the system, the terminal also preferably includes customer access control means, such as a customer ID and password, to control access to the remote computer system. In another aspect, the invention provides a corresponding method of ordering items from a manufacturer and/or distributor using an ordering terminal. The method can be embodied in computer program code.

The invention also contemplates a supply management terminal for a manufacturer and/or distributor which allows the manufacturer/distributor to book in items or parts thereof received from the supplier and to match the items received to a purchase order. The supply management terminal is suitable for use with the above described data processing system.

In some embodiments, the system may operate without a separate terminal for the intermediary, as core elements of the information in the computer system data store may be obtained from the customer and supplier independently of the intermediary. However, it is preferable that the intermediary has a window onto the system, for example, to control and manage the system and to manipulate data in the data store to book in items received, and to manage other aspects of the system such as unpaid invoices, item return, and quarantined, potentially-faulty items.

In a further aspect, the invention provides a procurement system terminal for informing a supplier of requests for supply of items using the above described graphical output means.

The data processing system may also support a procurement system terminal for user self-invoicing. This terminal comprises invoice data reception means for receiving, from a remote computer system, validated data comprising at least one order identifier identifying an order for goods validated as having been received by an order recipient; outputting means for outputting the received invoice data to the user; self-invoicing request means for receiving from the user a self-invoicing request; and invoice request transmission means for transmitting the self-invoicing request to the remote system. Typically, the goods receipt is validated by the distributor as having been received, before self-invoicing is permitted. The procurement system terminal may be used with the computer system described above to access the data in the data store, for example by means of records of a purchase order number, a goods received date, a goods identifier, a goods quantity, an order value and/or an order currency. In this way, human intervention in the invoicing process can be reduced to a minimum.

In a further aspect of the invention there is provided a stock planning tool to graphically display predicted stock level changes over a period of time, the stock planning tool comprising: computation means to calculate a predicted stock level at a future time by adding an initial stock level to a predicted cumulative additional stock level at the future time and subtracting a cumulative stock demand at the future time; and graphing means, in communication with said computation means, for providing a graphical output of variations of said predicted stock level over time.

The stock planning tool, in a preferred embodiment, comprises a computer program on a storage medium and/or a suitably programmed computer. In this embodiment, the graphing means may comprise software code for representing data graphically on a computer monitor, for example, as a bar or line graph. The future time at which the predicted stock level is calculated may comprise a date or a date and time.

Aspects of the invention are particularly suited to implementation over a communications network such as the Internet, an intranet or extranet. Thus, in preferred embodiments, the invention is implemented on general purpose computer systems implementing appropriate software. The present invention can be embodied in computer program code, and as is well known to those skilled in the art, the code may be implemented at a client computer or a server computer as desired. Computer programs may be provided to the computers by any conventional carrier medium such as tape, disk, programmed memory or other storage mediums or, alternatively, a program may be provided via a communications network, as an electrical signal.

The above and other aspects of the present invention will now be further described, by way of example only, with reference to the accompanying figures in which:
Figures 1a and 1b show, respectively, a schematic diagram of a generalised embodiment of the present invention, and a schematic diagram of a first specific embodiment of the present invention;
Figure 2 shows a schematic diagram of a second specific embodiment of the present invention;
Figure 3 shows a schematic diagram of components in a customer's or supplier's computer;
Figure 4 shows a schematic representation of a database for use with the system of Figure 2;
Figures 5a to 5f show tables of supplier accessible data for the system of Figure 2;
Figure 6 shows a table of distributor accessible data for the system of Figure 2;
Figures 7a to 7c show tables of customer data for the system of Figure 2;
Figure 8 shows an exemplary menu structure for a supplier's computer;
Figure 9 shows a flow diagram of an access procedure for a supplier's computer;
Figures 10a and 10b show a flow diagram illustrating a stock load procedure for a supplier's computer;
Figures 11a and 11b show a stock transfer procedure for a supplier's computer;
Figure 12 shows an exemplary inventory output of a supplier's computer;
Figures 13 shows an exemplary demand schedule web page output of a supplier's computer;
Figure 14 shows a flow diagram of a self-invoicing and accounting procedure for a supplier's computer;
Figure 15 shows an exemplary menu structure of a distributor's computer;
Figure 16 shows a flow diagram for a stock receipt procedure for a distributor's computer;
Figure 17 shows an exemplary menu structure of a customer's computer;
Figures 18a and 18b show a flow diagram for an order entry procedure for a customer's computer;
Figure 19 shows an exemplary order description web page output of a customer's computer;
Figure 20 shows an exemplary order acknowledgement web page output of a customer's computer;
Figures 21a and b show, respectively, an exemplary order list web page of a customer's computer; and an example of an order detail web page output of a customer's computer;
Figure 22 shows a first example of a demand graph web page;
Figure 23 shows a second example of a demand graph web page; and
Figure 24 shows a flow diagram for a predicted stock level monitoring procedure.

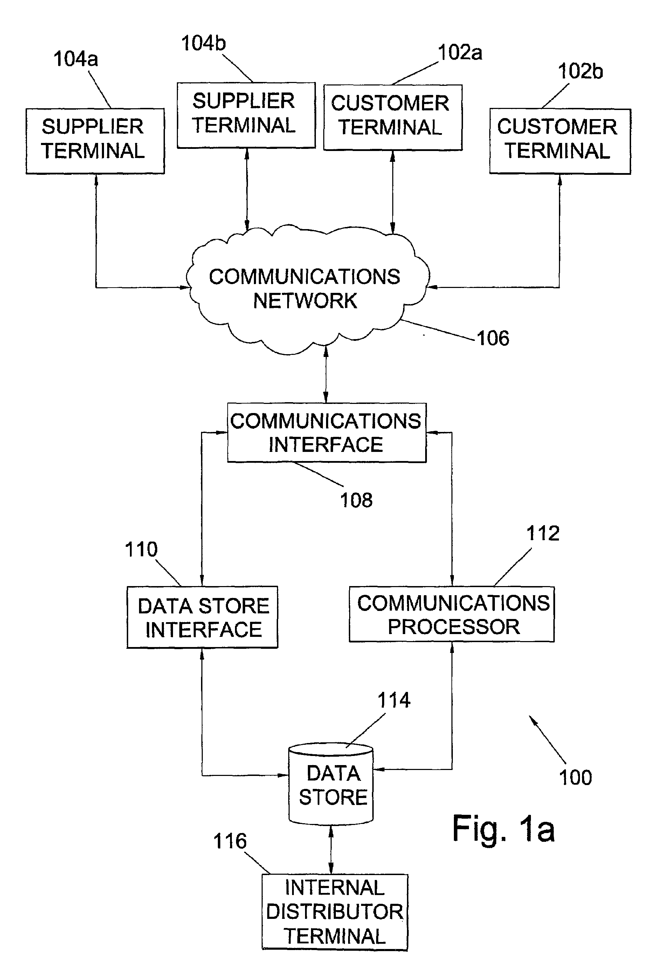

Referring first to Figure 1a, this shows a generalised embodiment 100 of the present invention. In Figure 1a, a communications network 106 is provided to which are coupled customer terminals 106a, b, and supplier terminals 104a, b. Also, coupled to communications network 106 is communications interface 108 which interfaces to data store interface 110 and communications processor 112, both of which have access to data store 114. Thus, data in the data store is accessible via a customer terminal 102 and, a supplier terminal 104. An internal user terminal 116 is coupled directly to data store 114 for adding to and modifying data within the data thereof. Communications processor 112 is for manually or automatically generating electronic notifications for sending over communications network 106; this is not an essential feature of the system. The communications interface 108, data store interface 110, communications processor 112 and data store 114 may all be provided within a single general purpose computer, or these functions may be split between separate computers in a manner well known to those skilled in the art.

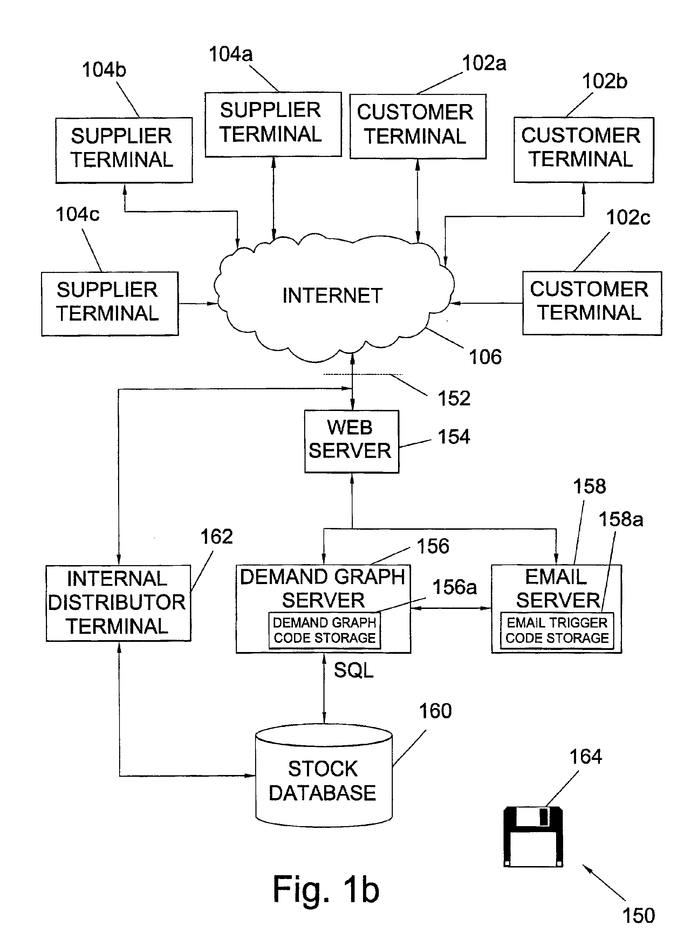

Referring now to Figure 1b, this shows a first more detailed schematic diagram of a specific embodiment 150 of the invention. Customer terminals 102a-c and supplier terminals 104a-c are coupled to Internet 106 for accessing web pages on a web server 154 which is also coupled to Internet 106, via a firewall 152. Web server 154 provides Internet data pages to allow customers to place orders and for suppliers to enter stock levels for items or parts of items. Web server 154 is managed by a systems service provider who, in the illustrated embodiment, is typically a parts distributor. Thus customers place orders with the distributor and the distributor is supplied by its suppliers in order to fulfil the customer's orders. However in other embodiments of the system the web server 154 may be maintained by a parts manufacturer in which case internal work units of the manufacturer are notionally considered to be suppliers to internal customers within the manufacturer who in turn supply parts to the customers. A manufacturer or distributor terminal (not shown in Figure 1b) may be provided to access web server 154 over Internet 106.

Web server 154 provides an interface for the customers and suppliers for data entry and to output data to the customers and suppliers but, in general, parts-related data is not closest on web server 154 but is closest in applications which provide data for web server 154 to include within web pages. Thus, in the illustrated embodiment, a demand graph server 156 including demand graph code storage 156a reads data from a stock database 160 to provide data for a demand graph which is then provided to web server 154 for incoporation in a web page for display on either a customer terminal or a supplier terminal (or a manufacturer/distributor terminal). Also coupled to web server 154 is an e-mail server 158 including e-mail trigger code storage 158a, which uses data calculated for the demand graph to determine whether a predicted stock level should trigger a warning e-mail to be sent by e-mail server 158 to a supplier and, the manufacturer/distributor. Communication between web server 154 and demand graph server 156 and e-mail 158 may use any conventional means such as CGI script or Java. Communication between demand graph server 156 and stock database 160 may again use conventional means such as SQL (Structured Query Language). Stock database 160 stores data relating to parts stock levels as described in more detail below. An internal distributor terminal 162 has direct access to database 160 for maintenance purposes and also has access to web server 154 for displaying demand graphs. Removable storage media, illustratively shown by floppy disk 164, may store code from code storage 156a or 158a for data from database 160.

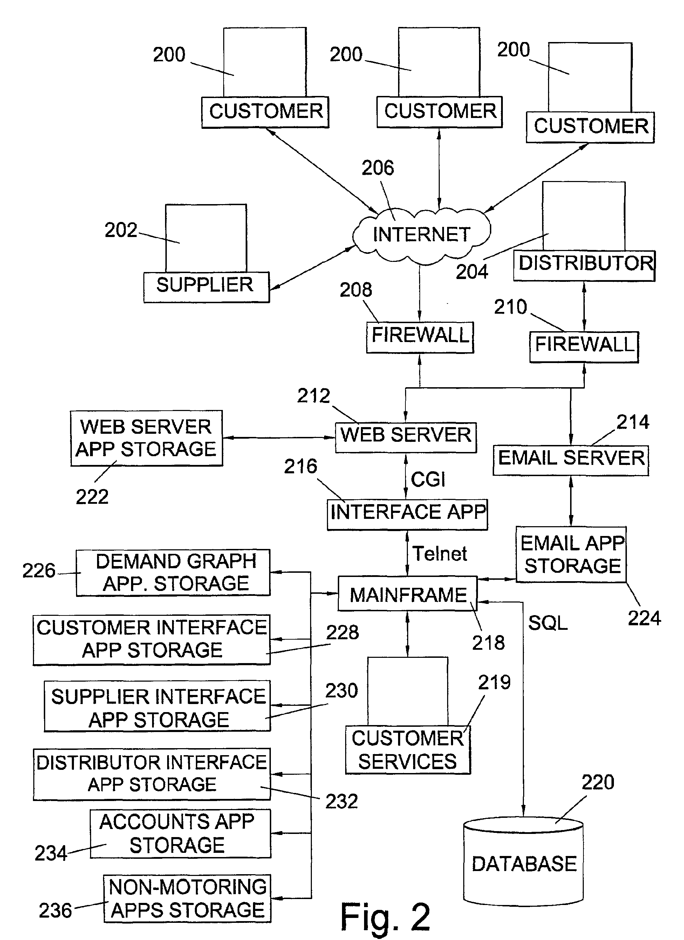

Figure 2 shows a second more detailed schematic diagram of a specific embodiment of the invention. In this embodiment, customer terminals 200, supplier terminal 202 and distributor terminal 204 are interconnected by means of internet 206. The distributor terminal 204 accesses the internet via firewalls 208 and 210 which provide additional security. Firewall 208 also couples web server 212 and e-mail server 214 to internet 206. Web server 212 is coupled by means of interface application 216 to mainframe computer system 218, which is linked to database 220. Mainframe 218 interfaces with database 220 using SQL (Structured Query Language). A customer services terminal 219 is coupled directly to mainframe 218 for use by the distributor's customer services department. Terminal 219 allows the customer services department to run applications in code storage areas 226-236 (described below) and to add to, change and/or delete data stored in database 220.

Web server 212 is an HTTP (Hyper Text Transfer Protocol) server and interfaces to interface application 216 using a Common Gateway Interface (CGI), for example, by executing a CGI script. Interface application 216 interfaces to mainframe 218 by means of a telnet protocol running under TCP/IP (Transmission Control Protocol/Internet Protocol). Interface application 216 may comprise a so-called "screen scraper" application providing a simple, character-based interface to applications 228 to 234 for web server 212.

Web server 212 is coupled to storage for a web server application 222. This allows web server 212 to generate web pages for downloading by customer 200, supplier 202 and distributor 204 terminals for interpretation by browsers implemented thereon. Web server 212 generates web pages using HTML (Hyper Text Markup Language) and Java code stored in web server application storage 222, to provide an interface to data received from database 220 and mainframe 218 via interface application 216.

E-mail server 214 can send and receive e-mails to and from customer terminals 200, supplier terminal 202 and distributor terminal 204 using e-mail application code in storage 224. In a preferred embodiment e-mail server 214 receives e-mail data from programs running on mainframe 218 in real time but dispatches e-mails to their recipients in batches, for example at the start or end of a working day. This helps the recipients manage the e-mails they receive. Some e-mails, for example those originating from a customer service department of the distributor and/or e-mails notifying a supplier a change in demand for a supplied part, may however be sent out in real time, without waiting for the next batch job to be processed.

Mainframe 218 may be an IBM mainframe, and in one embodiment is an LS400 system. Mainframe 218 has storage 228 for a customer interface application for providing a customer terminal 200 with an interface to data on database 220; storage 230 for a supplier interface application for interfacing supplier terminal 202 with database 220; storage 232 for a distributor interface application for interfacing a distributor terminal 204 with database 220; and storage 226 for a demand graph application. The mainframe 218 also has storage 234 for an accounts application for providing an accounts interface between supplier terminal 202 and database 220 and, optionally, for providing further accounts interfaces for customer terminals 200 and distributor terminal 204. Broadly speaking, there is a separate program for each menu option on a supplier's/distributor's/customer's main menu web page, as further described later.

Mainframe 218 is further coupled to storage 236 storing code for one or more monitoring applications to monitor data in the database 220 at intervals and to generate data for e-mail notifications of exceptional conditions for e-mail server 214. In particular the code monitors for immediate and predicted future changes in stock level to warn for example, when stock of a part is at risk of running out, as described in more detail below. The code also performs housekeeping functions.

The applications on the mainframe may be written in any conventional computer language, and in one embodiment are written in COBOL. Although only a single supplier terminal 202 and a single distributor terminal 204 are shown in Figure 2, in general there will be several such terminals, including at least one terminal for each supplier wishing to use the system. Similarly, the customer, supplier, distributor, and accounts applications will generally comprise a number of software components. These applications are described in more detail below.

The demand graph application calculates data for predicting future stock levels and based upon this and data in database 220 calculates data for providing a graphical output. The demand graph application is described in more detail below.

As is well known to those skilled in the art, the above described applications and servers may be implemented on separate, dedicated machines or they may comprise separate programs running on a single machine. Likewise, the connections between elements illustrated in Figure 2 may serve to illustrate logical or physical connections.

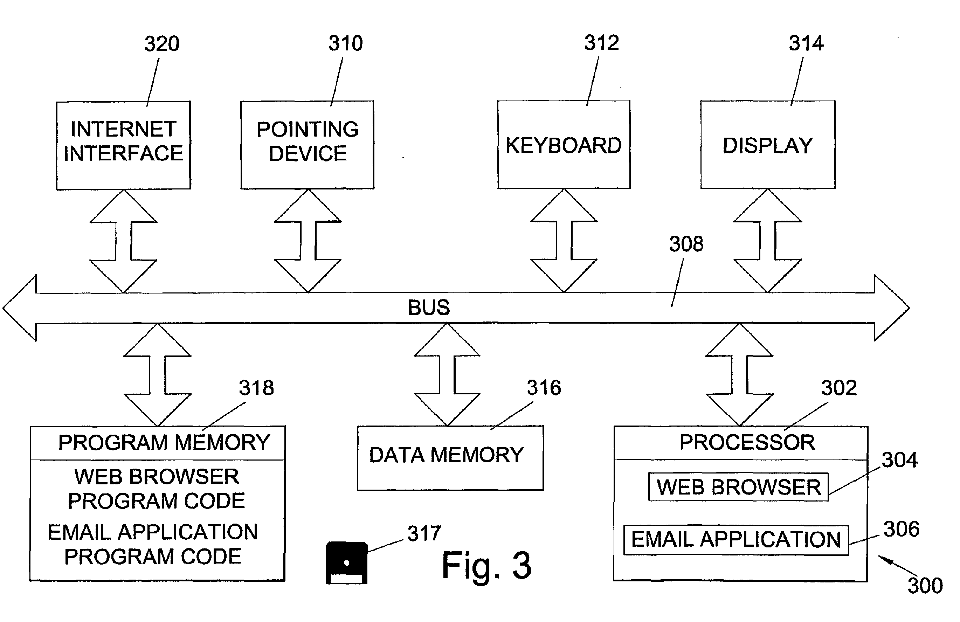

Figure 3 shows a general purpose computer system suitable for use as a customer terminal 200, supplier terminal 202 or distributor terminal 204. The computer includes an internet interface device 330 such as a modem or local area network interface (for indirect internet access). A processor 302 loads and implements code from programme memory 318 for a web browser 304 such as Microsoft Internet Explorer (trademark) and for e-mail application 306 for sending and receiving e-mails. Data storage 316 provides local data storage for the terminal and may comprise, for example, RAM and non-volatile storage such as a hard disk. Data in data store 316 and/or program store 318 may be written to and/or read from portable storage media, such as floppy disk 317. Pointing device 310, such as a mouse, display 312 and keyboard 314 provide an interface for the user. The components of a computer are linked by means of bus 308.

Normally, customer terminals 200, supplier terminal 202 and distributor terminal 204 will comprise a general purpose personal computer running the web browser and e-mail software. In use, web pages are downloaded from web server 212 by means of internet access device 300, for output on display 312, and user inputs received by means of pointing device 310 and keyboard 314 are transmitted back to the web server 212 again by interface device 300.

In order to better understand further features of the system, operation of embodiments of the demand graph invention will now be described in outline.

In an embodiment, web server 212, e-mail server 214, mainframe 218 and database 220 are maintained and operated by a parts distributor. The distributor receives parts from a plurality of suppliers and supplies them to customers to meet customer orders. The distributor may also manufacture parts to meet customer orders. Parts are identified by number and in one embodiment, each supplier has a set of parts that they have the exclusive right to manufacture for the distributor.

Each supplier has what may be termed a virtual system warehouse. This is a part of database 220 into which each supplier loads inventory information for the parts they manufacture. For each part, this information includes a lot number, assigned to each batch of parts, a quantity (of parts) and a location identifying where the parts are physically held. At this stage, the parts are still owned by the supplier. Normally, the supplier is required to maintain a minimum "safety stock" level for each part. For parts owned by a distributor, the locations may include locations at both the supplier and the distributor. This is desirable but not essential to the invention.

Unless previously committed to other orders, stock in all these locations is considered to be available for allocating to a customer order. For administrative reasons, to allow goods to be booked in and paid for by the distributor, parts are manufactured, stocked and supplied under a blanket purchase order from the distributor. This purchase order, however, plays no part in the day to day scheduling of parts supply and demand and such a purchase order will normally be for a relatively large quantity of parts to be provided at a relatively late future date.

In some embodiments the detailed scheduling of parts supply and demand is managed using the ATP (available-to-promise) system. However this is not essential to the demand graph. Initially, a customer logs onto web server 212 to place an order for a consignment of parts to be delivered on or by a specified date. Before the distributor commits to meeting the customer request, an ATP application accesses database 220 to determine the level of stock held by the relevant supplier (whether at the supplier or elsewhere) which is available for promising. The ATP system is then able to make a decision on whether or not the customer request can be met, and is further able to promise a date by when the requested parts will be available. The promised parts may then be identified as allocated or reserved so that customers requests may be fairly met on a first-come, first-served basis.

As well as locations at a supplier and the distributor, other types of location are also provided. A work-in-progress (WIP) location is provided together with a due date so that work-in-progress is available for promising to a customer based upon the due date for completion of manufacture of the relevant lot of parts. A stock-in-transit location is provided for each lot that is in transit. An associated in-transit date specifies the date on which the parts went into transit, and a delivery date can be calculated based upon this, by looking up a transit (delivery) time for the parts between the relevant locations in a table or record in database 220. Generally speaking, the system may thus allow for a transit time for all stock held at a supplier, and for work-in-progress at the supplier, when determining data for a graphical output. Other locations which are provided for lots include "quarantine" locations (for faulty or possibly faulty parts) and "reserved" stocking locations, neither of which normally contribute to stock level determinations.

Once orders have been logged into database 220, they are immediately visible to a supplier via terminal 202. Usually an immediate e-mail notification is also sent to the supplier concerned to warn of the new order for a part, so that the supplier can immediately take any necessary action and so that the supplier is always in possession of demand data which is as up to date of that of the distributor itself.

Demand data for new and existing orders is available to the supplier on a demand schedule web page provided by web server 212. A demand schedule for a given part lists customer orders for the part, for each order providing a due date and quantity required. For convenience, the orders may be grouped or binned so that, for example, the demand for a part may be presented as a quantity required during a given period, such as five working days. The demand schedule also shows any free stock owned and held by the distributor. This information, together with the agreed safety stock level, allows a supplier to formulate a production plan to meet the promised orders as set out in the demand schedule. The onus is placed on the supplier to automatically ship parts to the distributor to meet the customer demand for parts that supplier is responsible for. Provision of an in-transit location allows lots of parts to be tracked so that, for example, these are not sold twice.

Broadly speaking a demand graph is constructed to display over a period of, say, 30 days, both a predicted stock level for a part and known customer demand for a part. The predicted stock level is calculated by adding the manufacturer's/distributor's on-hand stock to the supplier's on-hand stock and, optionally, any stock in transit, to form a current stock level. To provide data as a function of time, work-in-progress due by a given date is added to the current stock level and, likewise, purchase orders with a due date and quantity are also added to provide a predicted stock level at a future date. In the case of a manufacturer, manufacturing work orders, which approximate to internal purchase orders, can also be taken into account. These items of data effectively all comprise, for an identified part, a quantity of that part and a due-to-stock date by which that quantity should be available to fulfil customer orders. Preferably work or purchase orders which are known to be overdue at a given date are zeroed. For example, if a batch of 100 parts is due to stock on 1st February, and the demand graph is being calculated on 2nd of February and the parts are not available, those parts are not included in the predicted stock level. Furthermore, parts which are known in advance to be overdue may also be excluded or, alternatively, if a later date for their provision is known this may be used in place of the original due-to-stock date. The predicted future stock level may also be increased by goods returned from customers where those goods are available for other customers rather than, for example, stock projected because of a fault. The predicted stock level is reduced by each definite customer order, whether the customer is internal or external. Such customer orders will generally define a quantity of parts required and a date on which the parts must be delivered to the customer, and thus the predicted stock level after that date is reduced by the ordered quantity. Optionally, the system may also take account of shipping time to the customer. The predicted stock level is also reduced by stock which has been rejected or quarantined.

It will be recognised that generally speaking the demand graph will comprise a series of spikes or delta functions indicating customer orders and a series of horizontal lines representing stock levels, transitions between stock levels occurring at points in time when there are customer orders (decreasing stock levels) and purchase orders to stock (increasing stock levels). Thus stock level data between these transition points can readily be determined.

In a preferred embodiment the system includes monitoring code to trigger an e-mail warning to, preferably, both the supplier and distributor when the demand graph for a stock item or part falls below zero or below a safety threshold level. This determination is made by calculating points on the demand graph, in effect, interpolating between transition points using a horizontal line (constant stock level). In practice complex data may give the appearance of a relatively complex demand graph predicted stock level curve but as will be seen from the above discussion, this will comprise constant stock levels and changes between those stock levels. In preferred embodiments the demand graph includes hyperlinks to the data used to construct the demand graph to allow a customer or supplier to drill down to underlying customer, purchase, or work order data.

It will be apparent to the skilled person that although use of the system has been described in relation to the supply of parts, in this context "parts" encompasses goods and products of all descriptions including, but not limited to, assemblies and sub-assemblies of components.

The technical structure and features of the system provide a number of advantages. A supplier can immediately see actual demand for a part, in real time, rather than a delayed summary of demand for a part such as would normally be provided by a distributor's purchase order. The system also allows the automatic delivery of stock to the distributor to meet the required date promised to the customer, and lead times can be reduced to transit times only. The system also alleviates the need to manually track and manage customer delivery dates and facilitates, for example, self-invoicing as described below. Furthermore, in embodiments customers view stock and work-in-progress at the supplier, and take account of the supplier-to-distributor transit time and the expected date of completion of the work-in-progress. This allows customer lead times and the level of inventory held by the distributor to be reduced.

Having reviewed the operation of the system, other aspects of preferred embodiments will now be described in more detail.

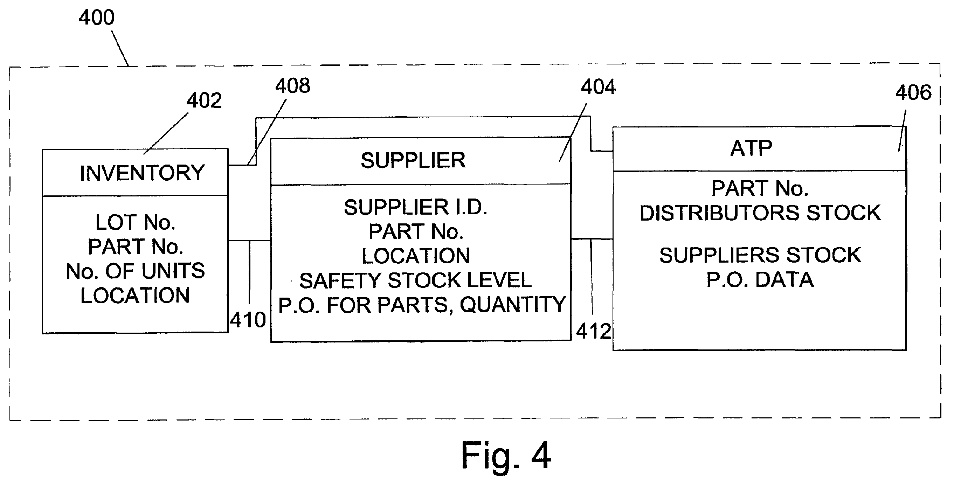

Figure 4 shows the basic elements of a generalised relational database 400 suitable for implementing the system; the database may be embodied in database 220 of Figure 2.

As is known to those skilled in the art, a relational database comprises a set of data elements conceptually arranged as a set of logically linked tables comprising records with corresponding fields.

In Figure 4 inventory table 402 stores records comprising a lot number, part number, number of units (of the part) and a lot location. Supplier table 404 comprises a supplier identifier, part numbers allocated to the supplier, supplier locations, safety stock levels for the supplier's parts and purchase order information for quantities of parts. Demand graph table 406 comprises a part number, a distributor's stock level, a supplier's stock level, and purchase order/work-in-progress data. The tables have corresponding fields as indicated by links 408, 410 and 412. In practice, in a specific embodiment, tables 402, 404 and 406 may each comprise a plurality of tables of data.

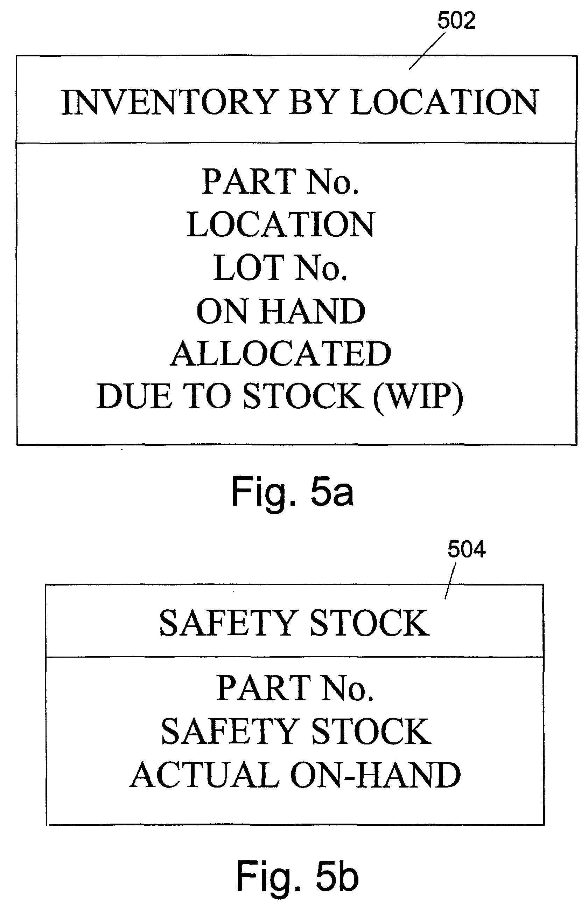

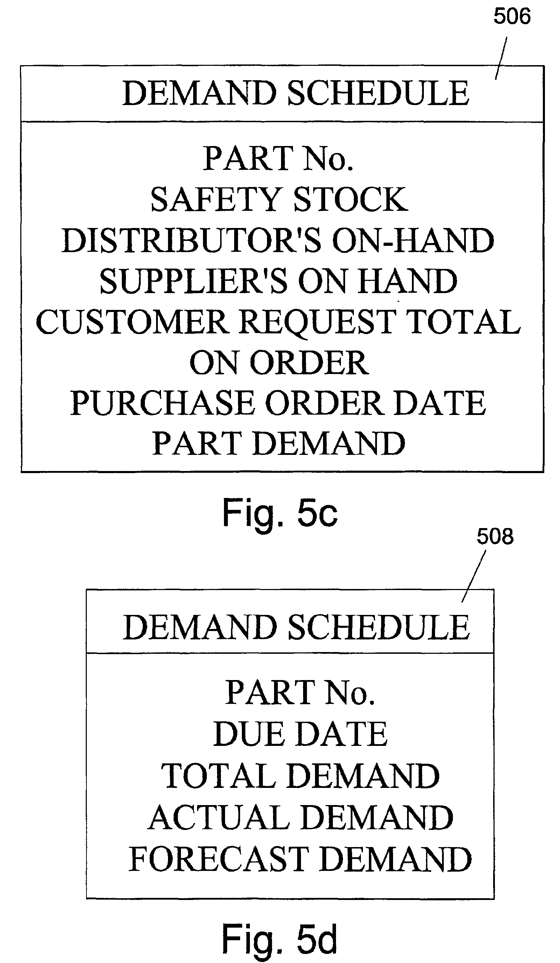

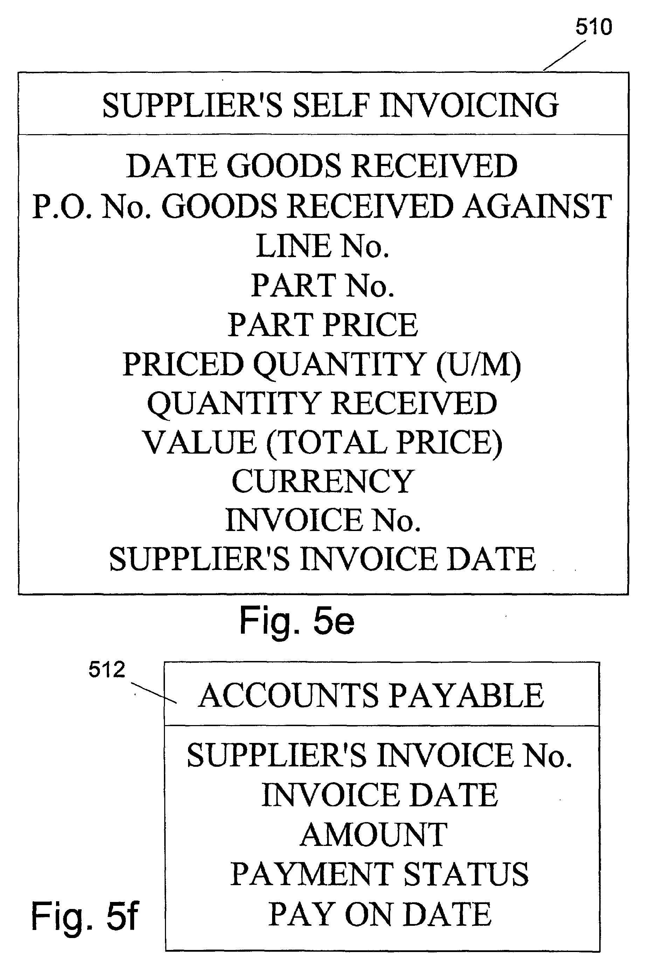

Referring now to Figure 5, this shows elements of a more specific embodiment of a database for the system. The tables in Figure 5 are for use by a supplier, but they may also be accessed by, for example, the distributor. Table 502 stores information on supplier inventory and its location. Thus, for example, a part number may be used to retrieve a table of data comprising lot number, lot location, lot quantity (number of parts on hand), lot allocation data (such as the number of parts allocated to an order) and, for work-in-progress, a due-to-stock date. Safety stock table 504, linked to inventory table 502 by part number, provides information on the minimum agreed safety stock level and actual on-hand number of parts held by the supplier for each part record.

Figures 5c and 5d show tables of demand schedule related data. Demand schedule table 506 stores records for parts indicating a safety stock level, distributor's and supplier's on-hand quantity of parts, a total number of customer requested parts, on-order information indicating a number of parts ordered on a distributor's purchase order, and the purchase order date, and part demand information. The part demand information, conceptually stored in table 508, comprises a part number, a due date, and a total number of parts demanded by the due date, (that is promised to a customer by the due date) comprising an actual demanded number of parts and a forecast demanded number of parts, the forecast demand relating to a customer order which it is known is going to be placed, but which has not been logged into the database by the normal order logging procedure. Demand schedule table 506 links to safety stock table 504 and to part demand table 508 for safety stock and part demand information.

Figures 5e and Sf show, conceptually, a supplier's self-invoicing table 510 and an accounts payable table 512. The supplier's self-invoicing table 510 stores information relating to a date goods or parts are received by the distributor (and logged into a distributor warehouse), and a purchase order number (from the distributor) that the goods or parts are received against. Supplier's self-invoicing table 510 also comprises a line number which comprises a sequential digit to identify uninvoiced receipts, a part number, a part price, a priced quantity (for example, price per 100 items) and a quantity (of goods or parts) received. The quantity received is the quantity of parts logged as having been received at the distributor and may be less than the number of parts provided by the supplier to the distributor to take account of, for example, faulty parts. Table 510 also includes an invoice value, currency, invoice number and invoice date.

Accounts payable table 512 also includes the invoice number and invoice date, as well as the invoice amount and payment status and pay-on date information. The payment status includes status values to indicate that the suppliers self-initiated invoice has been validated for payment, and to indicate that the invoice has been paid. Accounts payable table 512 is linked through, inter alia, the invoice number and date, to supplier's self-invoicing table 510.

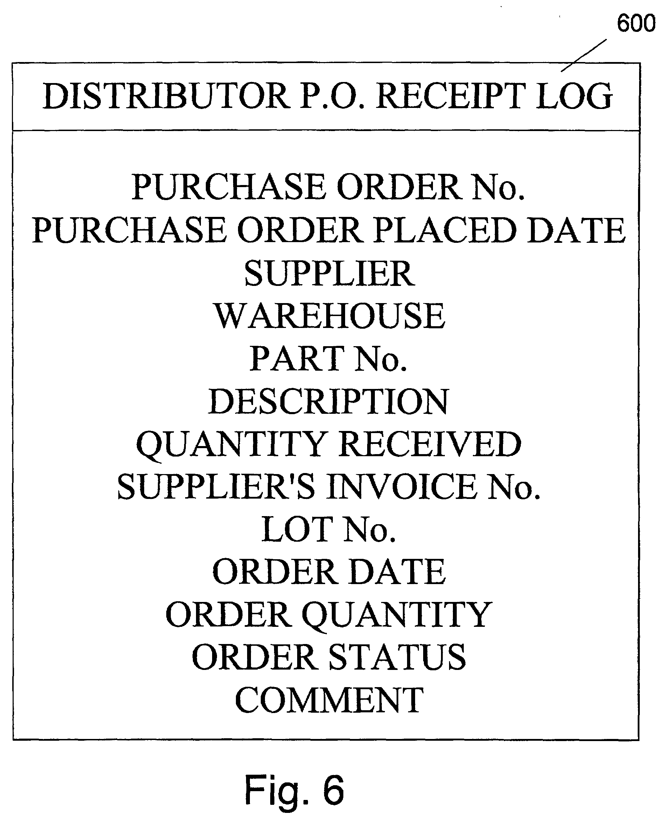

Figure 6 shows a distributor purchase order receipt log table 600. This includes a purchase order number and date against which goods can be logged into the distributor's warehouse. In this context, "warehouse" refers to both the physical storage location or locations at which parts are held by the distributor, and also to the database record of parts received and stored in the distributor's physical warehouse. When "warehouse" refers to a "virtual warehouse", it may encompass a plurality of different physical locations. Distributor receipt table 600 also includes supplier information, to identify from which supplier parts have come, and a warehouse number to indicate where the received parts are located. The table also includes part number information, a part description field, a quantity received field, a (supplier's) invoice number, a lot number, an order delivery date, an order quantity, an order status, and a comment field. The order status field may indicate supplementary information relating to the order such as an order complete status or an under-shipped status.

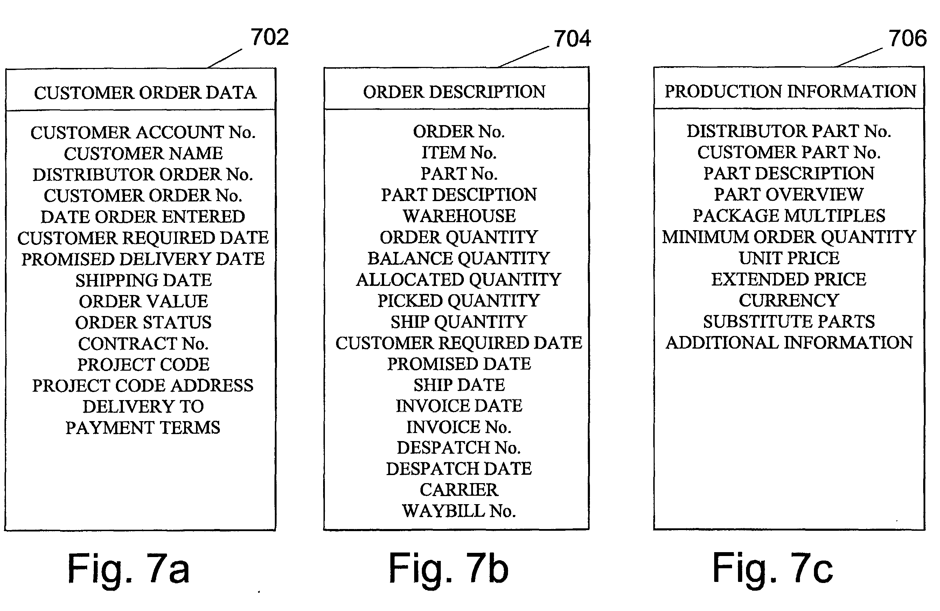

Figures 7a to 7c show data tables for providing data for customer accessible web pages. Customer order data table 702 comprises a customer account number and customer name, a distributor order number and the customer order number, a date the order was entered, a customer required date (for the ordered parts) and a promised delivery date. The table also includes a shipping date, order value, order status, delivery to information, such as a customer address, and information indicating payment terms, for example, "cash with order". The order status may store a value indicating one or more of the following order conditions: order entry hold, disbursement hold, order on hold, order acknowledged, allocated, pick list printed, pick list confirmed, dispatch note printed, order shipped, order invoiced, order carried forward, part allocated, order deleted and undefined status.

In one preferred embodiment orders are only permitted to be made against specified projects, details of which have been set up between the customer and distributor. This provides a safeguard against the unnecessary or incorrect ordering of parts to protect both the customer and distributor. Thus customer order data table 702 may also include a project code and, since a project may be associated with more than one address, against which orders may be placed, a project code address field may also be provided.

Order description table 704 comprises records of detailed order information including an order number, part number, part description, distributor warehouse number, order quantity, balance quantity (outstanding on the order), allocated quantity (before an order is delivered), a picked quantity (of goods selected for shipping), a shipped quantity, a customer required date (for the order), a promised delivery date, a shipped date, an invoice date, an invoice number, and, associated with shipping of a consignment of parts, a dispatch number and dispatch date, a carrier identifier, and a waybill number.

Product information table 706 provides customer accessible product information including a distributor's part number, a customer part number (since this may be different), a part description and overview, and order information. The order information includes package multiples, that is, the multiple quantity in which individual parts are packed together, a minimum order quantity, a unit price and an extended price (for example, for bulk orders) and a currency in which the price is quoted. Preferably, product information table 706 also includes a list of substitute parts which could be employed were the desired part not available, or not available in sufficient quantity by a customer's desired date, and other additional information, such as part-specific information.

The operation and features of the software in an embodiment of the system will now be described.

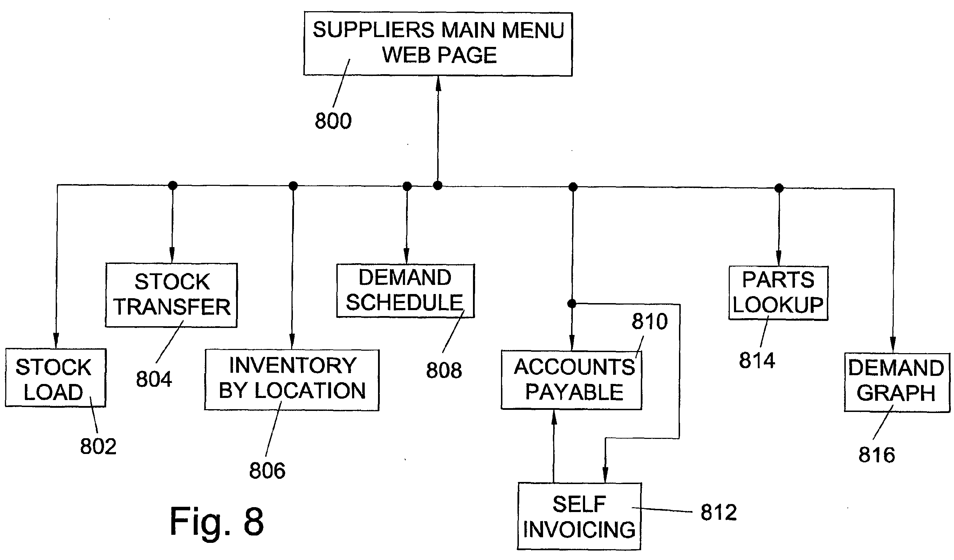

Referring to Figure 8, this shows schematically a supplier's main menu web page 800 offering links to a plurality of further pages for accessing supplier data or executing supplier procedures including a link to a demand graph page 816. Thus, main menu page 800 allows selection of a stock load (or "issue/receipt") procedure 802, for loading supplier stock into a virtual "supplier warehouse", and a stock transfer procedure 804 for moving lots of parts between locations in the supplier warehouse and, optionally, for amending data in the supplier warehouse to correct errors and/or for transferring stock out of the supplier's warehouse. Inventory-by-location application 806 may be used by a supplier to view locations at which lots of a part are held, and demand schedule application 808 provides a supplier with a table for a selected part listing a series of due dates and a demanded number of parts which must be provided by those dates.

This application also allows access to accounts payable application 810 which allows a supplier to view a list of their invoices together with the invoice date, amount and pay on date as well as a status code. This application may also be accessed independently of self-invoicing application 812 and self-invoicing procedure 812 allows the supplier to invoice themselves for goods received by the distributor, subject to a check that the goods have in fact been received. Parts look-up application 814 allows a supplier to access information on a selected part.

The supplier's main menu web page 800 has restricted access and further access controls may be implemented to restrict access to the accounts payable application 810 and the self-invoicing procedure 812.

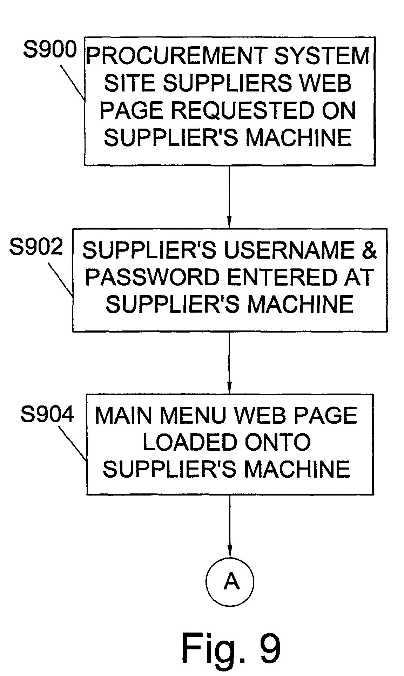

Figure 9 shows steps in a procedure for logging on to the supplier's main menu web page 800. Initially, at step S900, an access control web page is loaded onto a supplier's terminal, such as that illustrated in Figure 3, and displayed by a web browser such as web browser 304. The supplier then enters their user name and password and, optionally, a further digital certificate, at step S902 and these are transmitted from the supplier's terminal to a central computer system, such as the system incorporating mainframe 218 and web 212 and e-mail 214 servers, where they are validated. Once permission for the supplier to access the system has been confirmed, the supplier's main menu web page is transmitted from the central computer system to the supplier's terminal where it is displayed by the web browser (step S904). The access control procedure may be implemented in any conventional manner, for example, using a C or Per1 code module coupled to web server 212 and/or interface application 216. Preferably, even when access has been granted to a supplier, that supplier is only able to access data relating to parts which it has agreed to supply to the distributor. Since each supplier has its own set of part numbers, this can be achieved by means of a table listing which part numbers an identified supplier has permission to access related information on. Once a supplier has access to the supplier's main menu web page, other procedures such as the stock load and stock transfer procedures may be invoked.

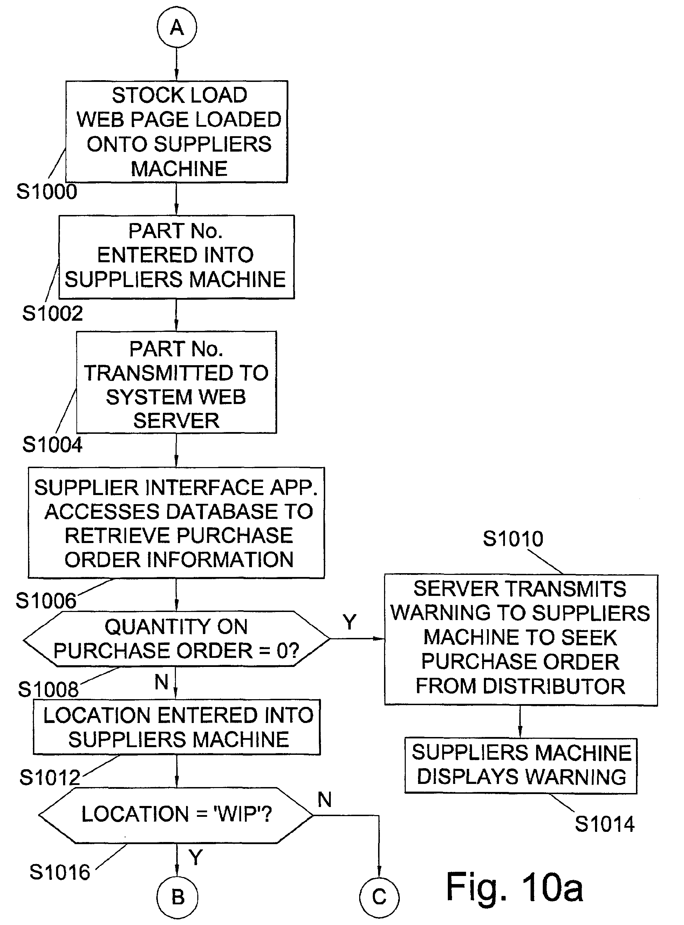

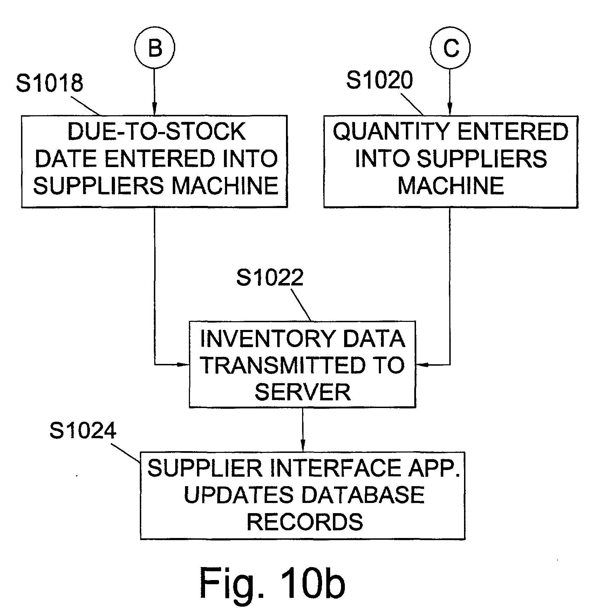

Referring now to Figures 10a and 10b, these illustrate the supplier's stock load procedure, using which a supplier enters into database 220 information relating to the quantity and location of lots of parts held by the supplier. Figure 10a continues the procedure of Figure 9 from 'A'.

At step S1000 a web page for the stock load procedure is transmitted from the central computer system to the supplier's terminal and displayed on the terminal's web browser. A supplier then selects or enters a part number for one of the parts the supplier has agreed to supply, at step S1002, and at step S1004 this part number is transmitted to the system web server 212 and thence to mainframe 218.

A supplier interface application such as an interface application in storage 230 of Figure 2, then accesses database 220 to retrieve and check purchase order information to ensure that the supplier is loading parts into their warehouse against a valid purchase order (step S1006). The system may store more than one purchase order per supplier against which parts may be loaded, for example, to control the price of parts. At step S1008 a check is made to determine whether the quantity on purchase order is equal to zero. If the quantity is equal to zero, in step S1010 a warning is transmitted to the supplier's terminal to alert the supplier to the need to seek a purchase order from the distributor, and displayed to the supplier at step S1014.

If the quantity on purchase order is not equal to zero, at step S1012 the supplier enters a part location into the supplier terminal 202. The system then determines, at step S1016, whether or not the entered location corresponds to a work-in-progress location. If the location does not correspond to work-in-progress, for example, corresponding instead to a location at the supplier or distributor, at step S1020 the supplier enters the quantity of parts present at the specified location. If, instead, the location does correspond to work-in-progress, a due-to-stock date, at which the work-in-progress should be complete, is entered into the supplier's terminal 202 at step S1018.

Following this, at step S1022, the inventory data entered by the supplier is transmitted to the central computer system where, at step S1024, a supplier interface application updates database 220. At this point, a lot number is also assigned to each batch of parts entered, and this is also recorded in the database. The lot number may comprise, for example, the relevant purchase order number against which the parts are loaded together with an additional two digits, for example allocated sequentially to each successive batch loaded. The lot number assists part traceability and quality control.

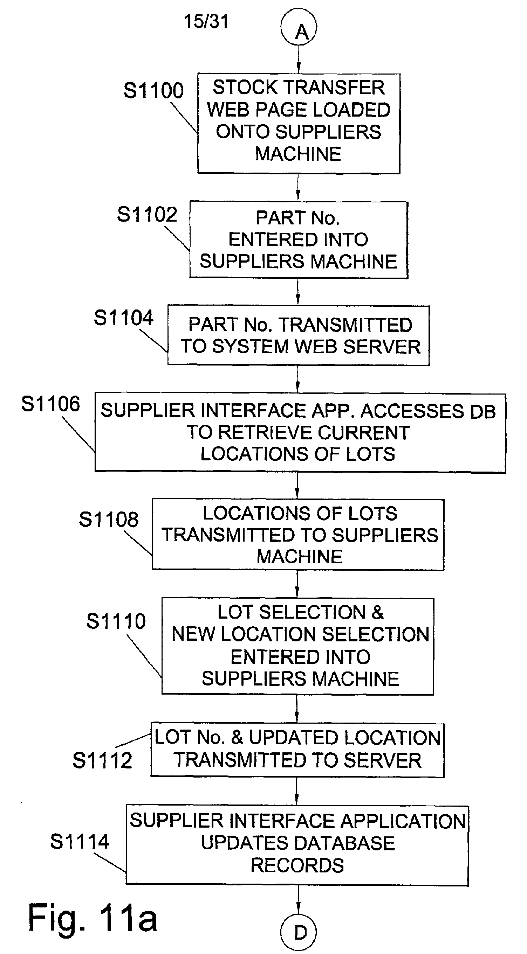

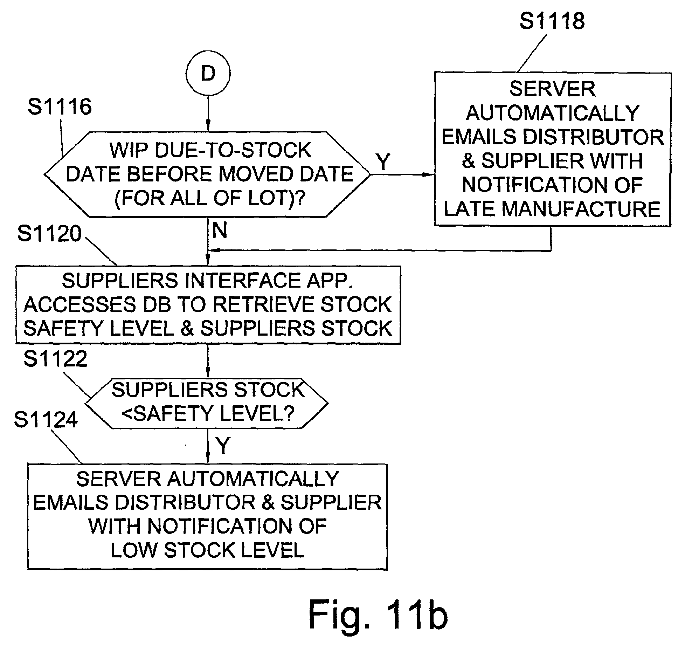

Figures 11a and 11b show a flow diagram of stock transfer procedure 804, which is used for modifying data within the supplier's warehouse to reflect movement of a supplier's physical stock. The procedure contains the procedure of Figure 9 at 'A'.

At step S 1100 a web page for stock transfer procedure 804 is loaded onto supplier terminal 202. A part number is then either selected or entered using the web page, at step S1102, and transmitted, at step S1104, to the central computer system. Here, at step S1106, a supplier interface application accesses database 220 to retrieve current locations of lots of the selected part; such locations include locations at the distributor, locations at the supplier, and work-in-progress and in-transit locations. A single lot of parts may be split amongst two or more locations. For example, where a work-in-progress lot has been partially completed, the lot will be in stock at the supplier and also at a work-in-progress location, the numbers of parts at each location reflecting the amount of the work-in-progress which has been completed. Parts at some locations, such as "reserved" locations, are considered as not available. The lot information is transmitted to supplier terminal 202 at step S1108, and displayed as a web page.

At step S1110, the supplier selects a lot and enters or selects its new location; optionally all of the lot may be moved to take account of partially complete work-in-progress. The updated location of the lot is transmitted to the central computer system at step S1112, and a supplier interface application updates database 220 at step S1114.

At step S1116, if stock has been moved from a work-in-progress location, the system checks whether the work-in-progress due-to-stock date is before the moved date, to determine whether or not the work-in-progress has been completed on time. Preferably, the system determines whether or not all the lot has been moved before the work-in-progress due-to-stock date to determine whether or not all the work-in-progress has been completed on time. If the due-to-stock date is before the moved date, the work-in-progress has been completed late and, at step S1118, the system automatically e-mails the distributor and supplier with notification of the late manufacture, before proceeding to step S1120. If the manufacture was all completed on time, the system proceeds directly to step S1120. Although in this procedure work-in-progress is only checked when the work-in-progress stock is moved, the skilled person will appreciate that the system could instead automatically monitor work-in-progress and provides an immediate e-mail notification as soon as a due date or time for completion is missed.

At step S1120, the system accesses database 220 to determine the total on-hand supplier's stock of the moved part and to retrieve the supplier's agreed safety stock for that part. The system then checks whether the supplier's on-hand stock is less than the safety stock level at step S1122 and if the stock is greater than the safety level, the procedure ends. However, if the stock is less than the minimum safety level, both the distributor and supplier are e-mailed with notification of the supplier's low stock level of that part.

E-mails are sent and received by e-mail server 214 of Figure 2 and the web page interface displays are managed by web server 212. Mainframe 218 is used to access database 220. The functionality of the system may be provided by a programme code architecture as illustrated in Figure 2, but the skilled person will appreciate that this is not limiting and that there are many ways in which the programme code to implement the functionality of the system may be distributed amongst the elements illustrated in Figure 2. For example, although the supplier procedures have been described in terms of web pages provided by web server 212, these could also be implemented by dedicated software running on supplier terminal 202 in direct communication with mainframe 218 and/or database 220. Referring to the more generalised architecture of Figure 1, the skilled person will recognise that the choice of where to locate the software necessary to provide the required system functionality is a matter of design choice.

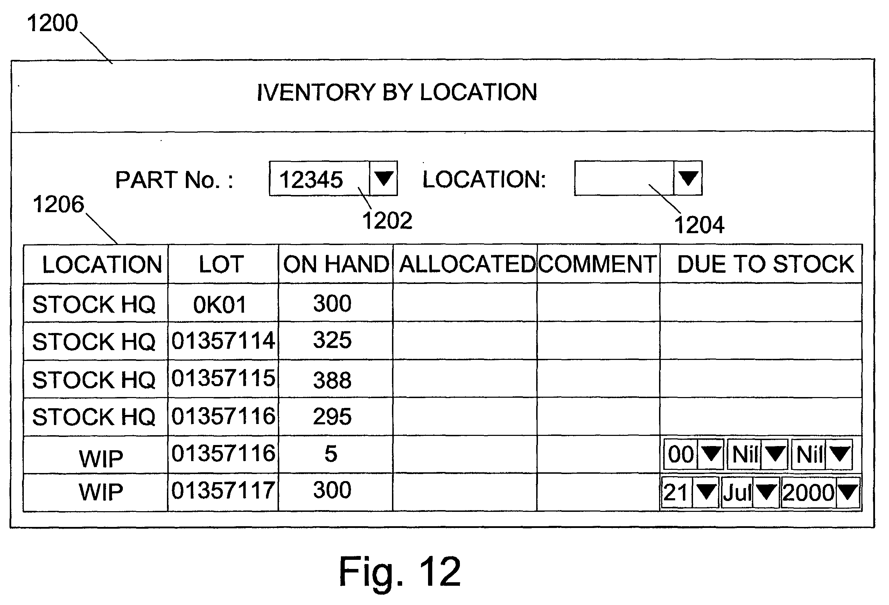

Figure 12 shows an exemplary web page presented to a supplier on a browser window in supplier terminal 202. In Figure 12, inventory by location data is displayed in window 1200. A part number is selectable using drop-down list 1202 and a location is selectable using drop-down list 1204 (in the illustrated example, left blank). The window then displays a table 1206 of locations and lot numbers for the selected part. Further information presented in the table includes the quantity of parts in the lot on hand, an indication of the number previously allocated to orders, and a comment field. For work-in-progress there is also a due to stock date by which date the work-in-progress (WIP) should be complete and the parts available to help meet customer orders.

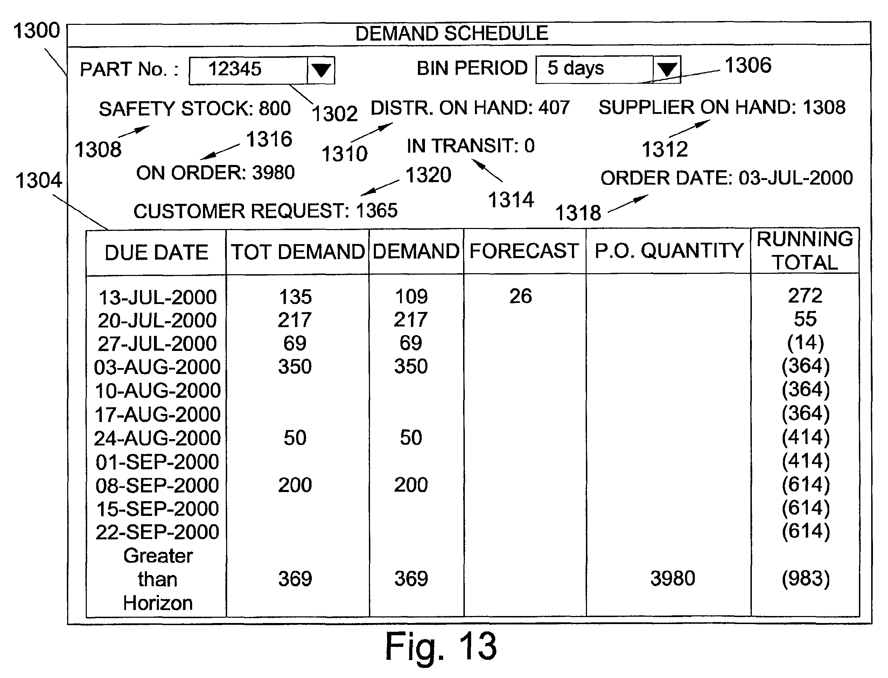

Figure 13 illustrates an example of a demand schedule web page 1300, for presentation to a supplier on a web browser window displayed on terminal 202. This web page also has a drop-down list 1302 for selecting the number of a part provided by the supplier. A table 1304 presents the demand schedule for the selected part, ordered by due date. The orders are grouped in "bin periods" selected using drop-down list 1306, in the illustrated example, 5 working days. If a bin period of 1 day is selected, the exact due date of the orders are indicated. The demand schedule 1300 lists further information relating to the selected part including a safety stock level 1308, a distributor's on-hand quantity 1310, a supplier's on-hand quantity 1312, and a supplier to distributor in-transit quantity 1314. The distributors on-hand quantity is non-purchased stock available to meet the indicated demand and comprises stock located at and owned by the distributor. A distributor's purchase order quantity of the part is indicated at region 1316 and a date on which the purchase order was placed is indicated at region 1318. Total customer request for the part is indicated at region 1320.

Table 1304 of the demand schedule indicates, week-by-week in the illustrated example, total demand for the selected part, split into actual demand and forecast demand as described above. The final row or record in the table indicates a demand for, in the example, 369 parts to be delivered by a date which is beyond a determined horizon date for the part. Also beyond the horizon is a distributor purchase order, in the example, for 3980 units of the selected parts. Together with the (negative) current indication of demand for 1414 units, 2197 (=3980-1414-369) units are notionally available for the supplier to manufacture against a purchase order. A "parts available" figure is calculated but not displayed. This figure represents the distributor's on-hand stock, less the safety stock level, less the total (cumulative) demand so that, for example, as of 13 July 2000, in the example (-528) units (=407-800-135) of the selected parts are notionally available.

A final column in table 1304 of the demand schedule provides a running total of available stock calculated by adding the distributor's on-hand stock to the in-transit stock and subtracting the (running) total demand. This running total figure is useful to a supplier because it allows a supplier to determine when stock is to be shipped to the distributor. If the running total is positive the distributor's stock is sufficient to meet demand; when the running total is negative the distributor requires additional parts from a supplier in order to meet their customers' demands. In the example of Figure 13 the "bin period" is five days, but by selecting a bin period of one day a supplier can determine when, to the day, the distributor's stock of parts goes to zero.

Monitoring code, as described with reference to Figure 2, monitors the running total figure in real time and initiates an e-mail notification to a supplier of a part shortly before the distributor's stock is due to fall to zero. The warning is sent early enough to allow sufficient time for stock shipped from the supplier to reach the distributor in time to meet the known demand. Thus, the e-mail warning is sent at a time when the stock is due to fall to zero offset by at least the supplier-distributor shipping transit time, in one embodiment, two working days for shipping within the distributor's home country. A flag for the e-mail notification is generated in real time - that is, the running total figure is monitored substantially continuously - but the e-mail notification is only sent out to the supplier at a predetermined, such as a batch processing time when e-mails for all suppliers are sent out together, for example overnight. This alleviates inundation of a supplier with e-mails. Preferably the e-mail notification sent out includes a hyperlink to demand graph 816 and stock transfer procedure 804 to facilitate a supplier taking action to correct the potential problem by transferring stock to the distributor. Similar monitoring code operates in connection with the demand graph, as described later.

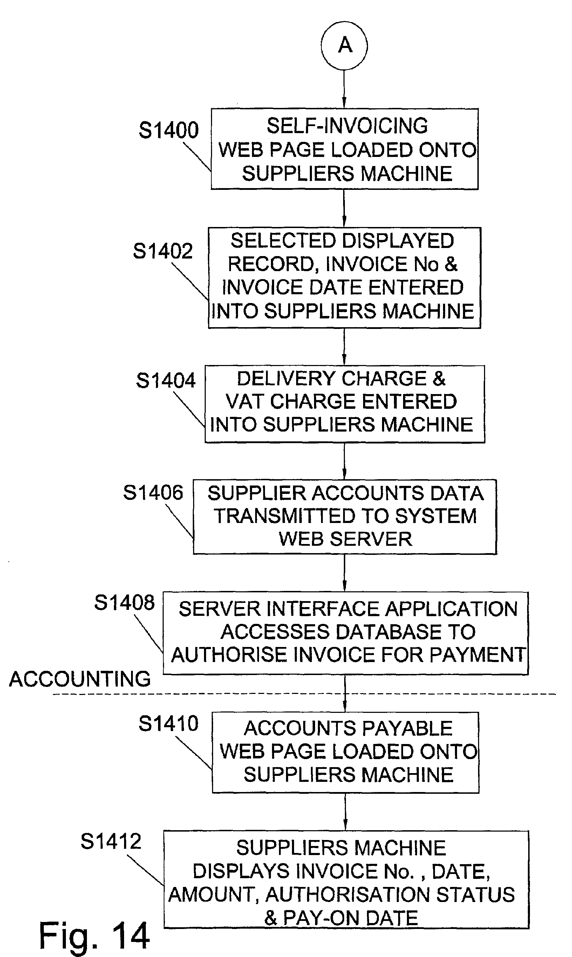

Referring now to Figure 14, this illustrates the self-invoicing procedure 812 of Figure 8, and continues from the supplier's main menu login and access control procedure described with reference to Figure 9.

At step S1400 a supplier self-invoicing web page is downloaded from the central computer system onto the supplier's terminal 202. The web page is displayed by the supplier's terminal and the displayed data, in one embodiment, includes data selected from the supplier's self-invoicing table 510 illustrated in Figure 5e. When the distributor receives parts from the supplier a record is stored in database 220 which includes the date the parts were received, the purchase order the parts were received against, the purchase order price, the purchase order line number, the part number and quantity received, the total price and the associated currency. At step S1402 the supplier selects a displayed record which includes, in one embodiment, at least a purchase order number, part number, quantity and order receipt date, for self-invoicing. The supplier may select more than one of the displayed records for invoicing, but can only select orders which have been received or orders which pre-date delivery by the transit time for the ordered parts from their location to the distributor.

In addition to selecting displayed records for invoicing, the supplier also enters an invoice number and an invoice date and, at step S1404, may add a delivery charge and a supplemental tax charge such as value added tax. The information entered by the supplier is then submitted to the central computer system in step S1406, and at step S1408, database 220 is accessed to check and authorise the invoice submitted for payment. The checking includes a step of matching the supplier's invoice to the purchase order for the invoiced goods.

The self-invoicing procedure may be ended at this point or, alternatively, the procedure may be continued as illustrated below the dashed line in Figure 14 to load an accounts payable web page onto supplier terminal 202, at step S1410. Preferably, the accounts payable web page is also accessible separately from the supplier's main menu web page 800, as illustrated in Figure 8. The supplier is then able to view, at step S1412, a list of invoice numbers and associated invoice data, as set out in accounts payable table 512, illustrated in Figure 5f. Thus the supplier is able to access a display of invoice number, invoice date, invoice amount, payment authorisation status, and a pay-on date on which the invoice will be paid.

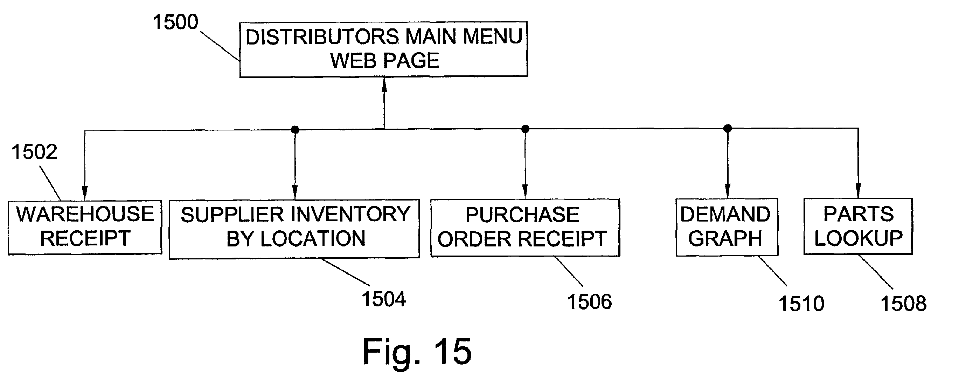

Referring now to Figure 15, this illustrates procedures accessible from a distributor's main menu web page 1500. Procedures accessible from the main menu page include warehouse receipt procedure 1502, for logging in goods received at the distributor, supplier inventory by location page 1504, for displaying lots of parts and their locations in a similar manner to that illustrated in Figure 12, purchase order receipt procedure 1506, for receiving stock against a purchase order, a parts look up procedure 1508, for displaying detailed information on selected parts, such as part description and substitute information, and a demand graph web page 1510.

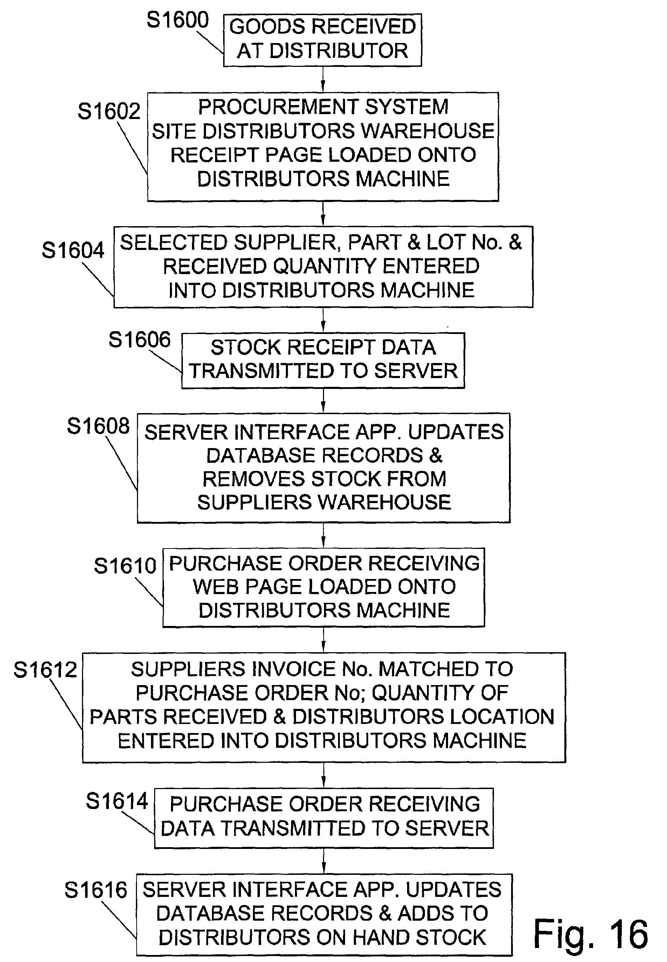

Referring now to Figure 16, this shows a procedure for entering parts received by a distributor into a virtual distributor's warehouse. At step S1600 goods are received at the distributor and at step S1602 a distributor's warehouse receipt page is downloaded onto a distributor's terminal 204 such as the terminal illustrated in Figure 3. The distributor then uses the warehouse receipt web page to select a supplier, part and lot number and to enter a received quantity of the parts (step S1604). This stock receipt data is then transmitted to the central computer system at step S1606 and, at step S1608, records in database 220 are updated to reflect the movement of stock. More particularly, stock is decremented from the relevant supplier's location (which will normally be an in-transit location) and incremented in the distributor's warehouse.

The distributor's warehouse may comprise a single location or it may comprise a plurality of locations corresponding to separate physical locations at which parts received by the distributor may be held; in the latter case a distributor's warehouse location may also be entered by the distributor. If the supplier sends stock to the distributor too early, the system will not allow it to be booked in and the goods are physically rejected and returned to the supplier. In one embodiment, stock cannot be booked in three or more days before when it is due. The date at which the goods are entered into the distributor's warehouse determines the earliest permitted self-invoicing date (which may be adjusted to take account of transit time, as already described).

Following the updating of database records for the distributor's warehouse, a second stage of the goods receipt procedure begins at step S1610, when a purchase order receiving web page is loaded onto distributor terminal 204. Stock is received at the distributor against an open purchase order which is set beyond the trading time fence, with a quantity which is estimated to be sufficient to fulfil at least short-term customer demand. In a preferred embodiment, the lot number provided in step S1604 (or re-entered at this point) links to a distributor purchase order number which is displayed on the distributor's order receiving web page. At step S1612, an invoice number provided by the supplier is then entered into the purchase order receiving web page and is thus matched to other data items on the page, which include the purchase order number, quantity of parts received and distributor's warehouse location; if an invoice number is not available (or, as an alternative) a delivery note number may be used instead. This further information is then transmitted back to the central computer system at step S1614 where, at step S1616, the records of database 220 are updated and the booked in parts are added to the distributor's on-hand stock.

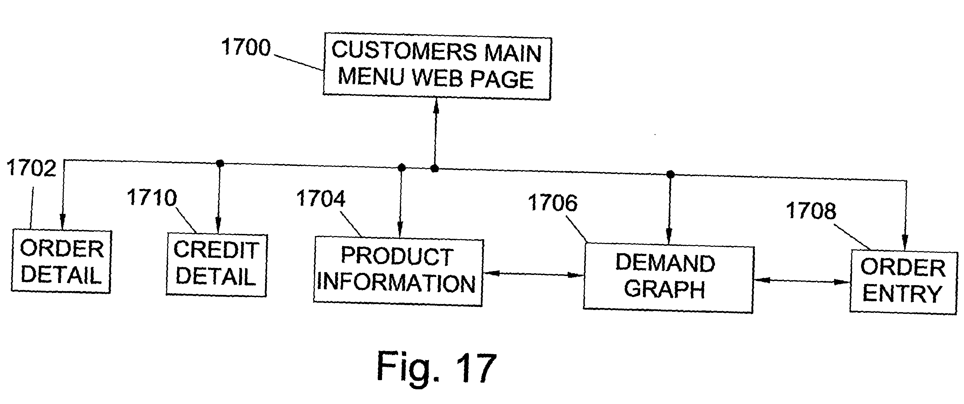

Figure 17 shows a menu structure for a customer's main menu web page 1700, for display on a customer terminal 200. Access to the customer's main menu web page 1700 is policed by an access control system, not shown in Figure 17, such as a requirement to enter a customer number and/or password. The main menu page allows access to one or more order detail web pages 1702 which provides access to customer order data, including the data listed in table 702 and described with reference to Figure 7a. The main menu web page also allows access to product information web pages 1704, providing product information, for example, as set out in table 706 and described with reference to Figure 7c. Demand graph web page 1706 allows access to demand graph information as described below. Order entry web page 1708, again accessed via main menu page 1700, also provides access to the demand graph and allows a customer to place orders with the distributor. The product information, demand graph and order entry web pages preferably include hyperlinks to one another to simplify ordering a part after its specification and availability have been checked.

Finally, credit detail web page 1710 provides financial information for a customer including a total credit limit and an available credit limit. This credit information is preferably presented graphically, for example as a pair of adjacent bars on a bar graph, to visually indicate to a customer their available credit as a proportion of, or alongside, their total permitted credit. Such a graphical representation of the customer's available credit assists a customer in determining the risk of a "credit hold" in the near future. The credit detail web page may also display other financial information, such as a total value of orders placed but not yet shipped, and the customer's highest historical accounts receivable balance. Date information such as a date the customer's account was established, a last payment date, a last order placed date, a last shipment date, a last invoice date, and a statement date are preferably also displayed.

The product information web pages preferably include a product/pricing information web page displaying, in tabular form, a list of distributor part numbers and corresponding customer part numbers and part descriptions with one or more hyperlinks to more detailed pricing information for a part including, for example, part package multiple data, a minimum order quantity for the part, a standard part lead time, a basic part description, and a price for a required quantity of parts. This pricing information may include a link to a demand graph for the part, as described above. Other links on the product/pricing information web page display on-line catalogue data for one or more parts.

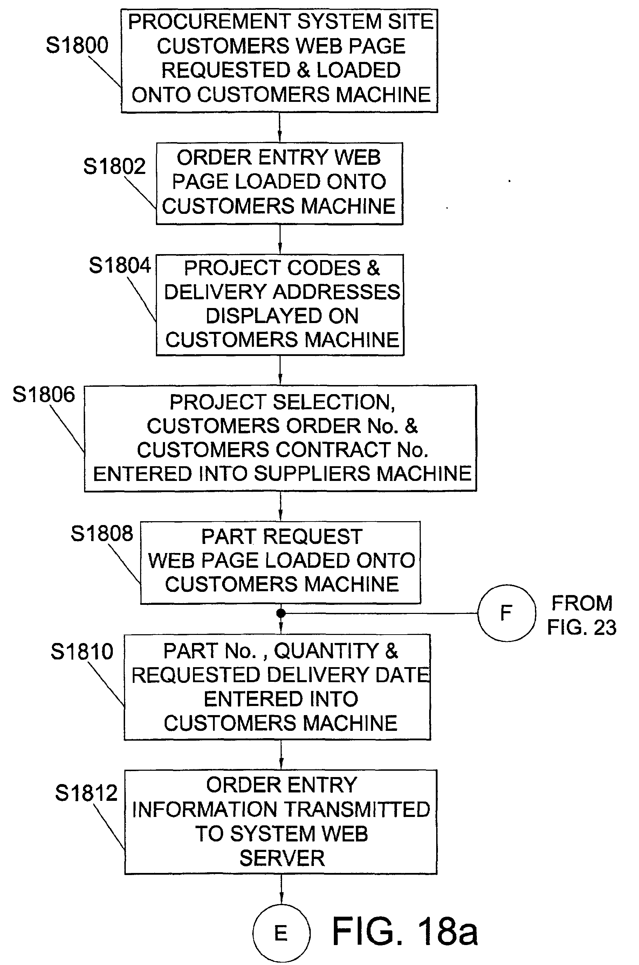

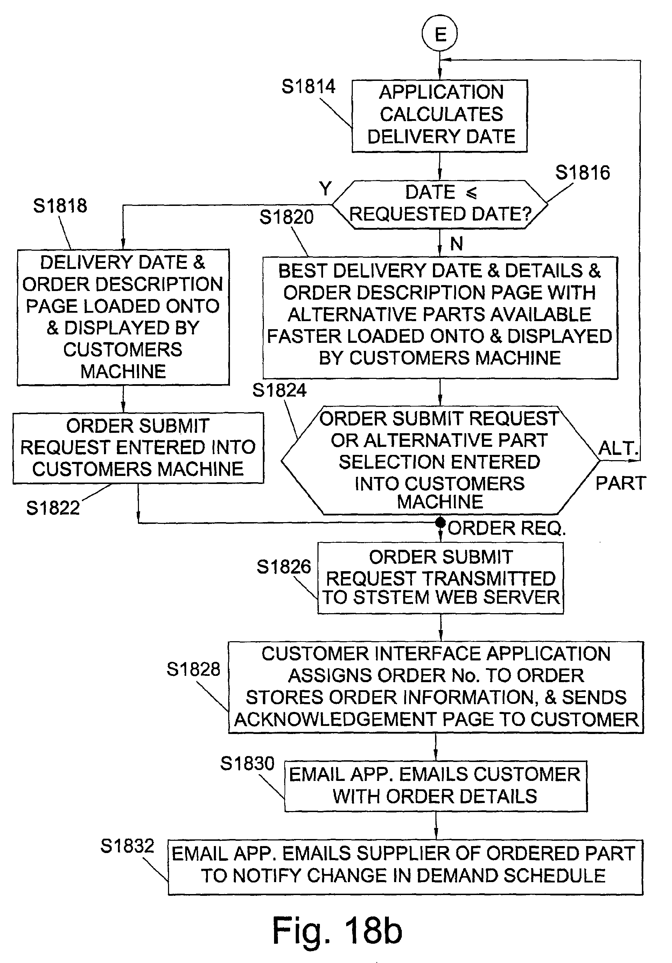

Figures 18a and 18b show a customer ordering procedure. Initially, at step S1800, the customer's main menu web page is requested and loaded onto a customer terminal 200. Customer terminal 200 may be a general purpose computer such as that illustrated in Figure 3. Customer access to the system is controlled by means of a customer user name and password for digital certificate which must be provided to the central computer system before the customer's web page is accessible (the access control steps are not shown in Figure 18).

The customer then selects the order entry menu option and, at step S1802, an order entry web page is loaded onto the customer's terminal. This web page includes one or more customer project codes on which parts may be ordered, and one or more delivery addresses associated with each project code, which are displayed on the customer's terminal at step S1804. At step S1806, the customer selects a project and associated address to order parts against, and enters a customer order number and a contract number into the web page, which is then submitted to web server 212 for processing by the central system.

A part request web page is then transmitted onto customer terminal 200, at step S1808, where it is loaded and displayed by a web browser. The parts request web page has fields to allow a user to enter a desired part number and quantity, and a date by which that quantity of the parts is required. This information is entered by the customer at step S1810, and this order entry information is then transmitted to web server 212 at step S1812. The order entry web page may also offer other functions, such as a search for parts when an exact part number is not known.

At step S1814 the application software calculates a delivery date for the specified quantity of parts, which is preferably a date by when the distributor can guarantee to provide the specified quantity of parts to the customer. To determine this date, the system first looks at the distributor's on-hand stock and attempts to fulfil the order using this stock alone. If the order can be fulfilled in this way, the delivery date is simply the current date (i.e. of the order request information) offset by the transit time from the distributor to the customer. This transit time will depend upon the customer's location and could be, for example, one day for delivery within the distributor's country, three days for delivery to a different, but nearby country and five days for global delivery. Database 220 may store a table of transit times from the distributor to each customer/project address.

If the distributor's on-hand stock is insufficient to meet the customer's request, the system looks next at the supplier's in-transit stock, then at the supplier's available on-hand stock, and afterwards at the part's supplier's work-in-progress. If the distributor has any available stock of the part, the order may be split to provide those parts available directly from the distributor first, a second batch of parts from the supplier's in-transit stock and the remainder from the supplier's work-in-progress. If there is still insufficient stock to meet the requested quantity of parts, the deficit may be offered by a date calculated based upon a known replenishment of stock time for that part and stored in database 220.

When calculating a delivery date for an order which is being satisfied by in-transit stock, stock held at a supplier's warehouse, or supplier's work-in-progress stock, the system takes account of, respectively, when the goods in-transit are expected to arrive at the distributor; the transit time from the supplier to the distributor; and the expected work-in-progress completion date delayed by the supplier-to-distributor transit time. Preferably the system will also adjust the promised date to take account of any non-working days such as weekends. In some applications, for example, the replenishment or stores time may be affected where the distributor's warehouse staff do not work on Saturday and/or Sunday.

The normal customer requirement is for parts to be delivered as soon as possible, but in some cases, for example to keep customer stock low during just-in-time manufacturing processes, stock must be delivered on a precise date and/or time; when determining delivery date for an order required as soon as possible, the delivery date may notionally be assumed to be the current date (on which the calculation is being made).

Where a manufacturer calculates delivery dates for its customers, the same general principles apply. In such a system a supplier supplies one or more parts of items which are manufactured by the manufacturer for delivery to its customers. The database stores stock levels for the parts held by the supplier, as well as work in progress information relating to the parts. The calculation is based upon the level of stock of parts held by both the manufacturer and the supplier and, preferably, also upon the supplier's work in progress for the relevant parts. The calculation also takes into account the time to manufacture an item using a supplied part.

When a customer request is received for a specified quantity of items, the delivery date will depend upon the availability of the components for the requested items, and will also depend upon the manufacturing time. Where a single component part is processed by the manufacturer to create the requested item, the date or dates at which the needed quantity of the component will be available for processing by the manufacturer are determined and then offset by the manufacturing time to calculate a delivery date.

More typically, several parts are required to manufacture an item needed to fulfil a customer order and in this case a date or dates at which the quantities of each part will be available at the manufacturer are determined and these dates are then input into a project plan to determine the date or dates at which the manufacture of the requested items will be complete (there will be more than one date where not all the desired number of components can be manufactured by the same date). In general, the date at which the manufactured item will be available-to-promise will depend upon which part's supply lies on the manufacturing project plan critical path, and the available-to-promise date will depend upon the date at which the required number of this part is available for the manufacturer.

Referring now to Figure 18b, at step S1816 the calculated delivery date is compared with the customer requested date. If the requested goods or parts are available-to-promise before the requested date, the procedure continues to step S1818, in which an order description web page is loaded onto and displayed by customer terminal 200. This order description page displays order details including the part number, requested quantity and promised delivery date. When the calculated date is on or before the customer requested date, the delivery date is set at the date on which the customer has requested that the parts be delivered. The customer may then proceed to submit the order at step S1822.

If the parts cannot be promised before the date requested by the customer, the procedure continues to step S1820, in which a web page is transmitted to and displayed by customer terminal 200 to indicate the best (that is normally the earliest) delivery date the distributor can promise, together with further order information. If the complete customer order cannot be delivered by the requested date, again the procedure continues with step S1820 and the order description web page displayed indicates what parts of the order can be promised for delivery by what corresponding dates.

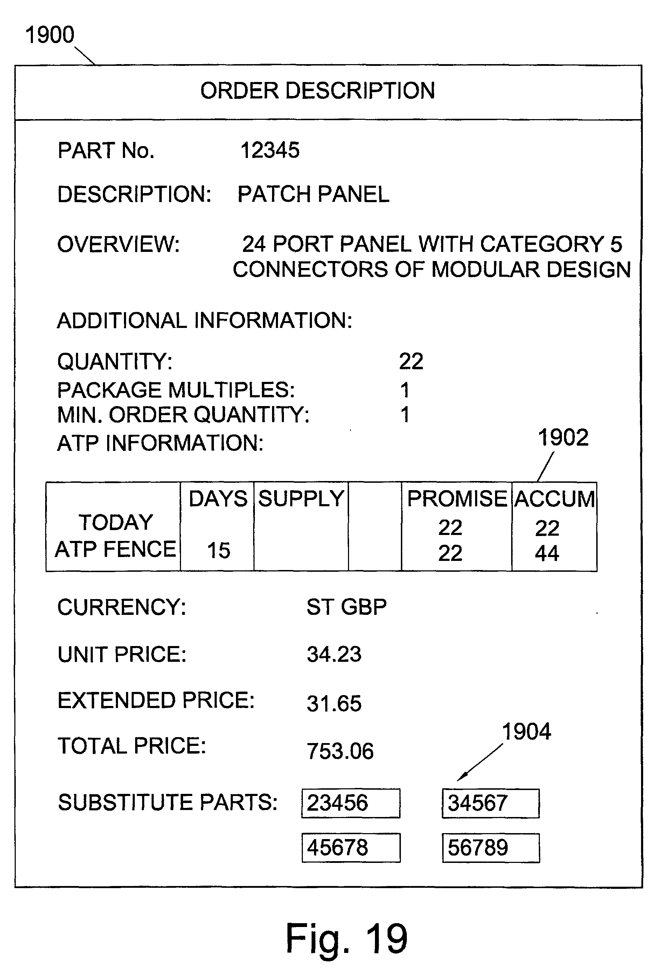

Figure 19 shows an example of an order description web page 1900, suitable for presentation in step S1820. This page provides a selection of information from table 704 described with reference to Figure 7b. The order description page 1900 displays part number and requested quantity information, as well as delivery information in table 1902. In the example 22 lots have been promised for delivery "today" and a further 22 units have been promised after 15 days. A total price for the order is also given, together with, in region 1904, suggestions for substitute parts, which may be available faster or which may have a different price or specification.

Referring again to Figure 18b, from the order description web page, the customer may choose, at step S1824, to select an alternative or substitute part, in which case the procedure returns to step S1814 to recalculate a new delivery date for the new part. Alternatively, the customer may choose to submit the order with the available-to-promise date provided by the system as a promised delivery date for the selected part or parts.

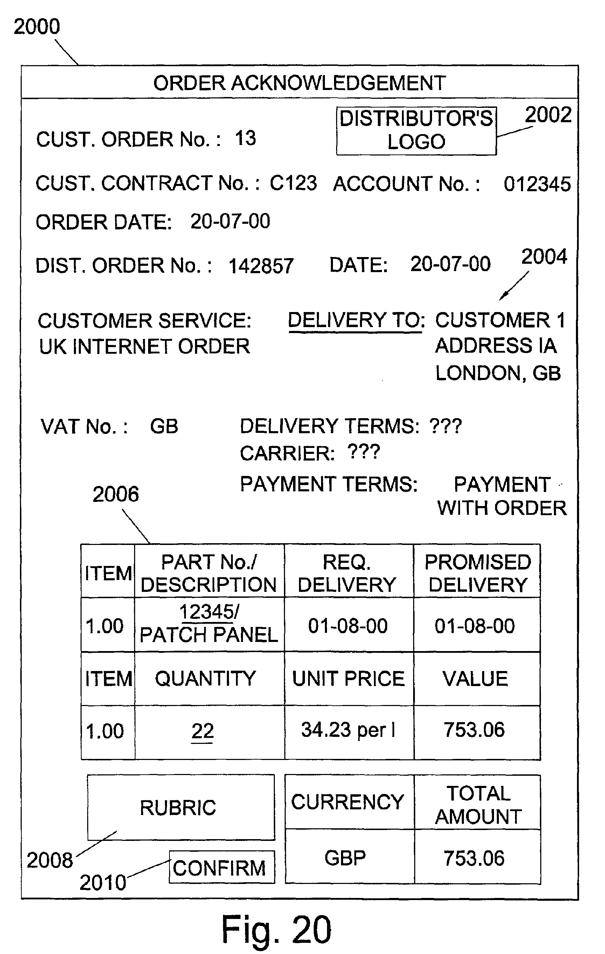

Once the customer has decided to submit an order, either with their initially requested date, or with the calculated delivery date, the procedure passes to step S1826 where the order submit request is transmitted to web server 212 and then to mainframe 218. Then, at step S1828, a customer interface application in storage 228 assigns an order number to the order and stores the order in database 220. Alternatively, the system may e-mail the customer, using e-mail server 214, with a request to submit a return e-mail or paper copy of the order, for greater confidence. The interface application preferably also sends an order acknowledgement web page, as illustrated in Figure 20, to the customer's machine via web server 212.

Optionally, an order confirmation step may be included in the procedure, after display of the order acknowledgement web page, data stored in database 220 relating to the order remaining uncommitted until final confirmation by the customer. Once the order information has been stored in database 220 an e-mail application in storage 224 e-mails the customer with confirmation of the order details, at step S1830, and then, at step S1832, e-mails the relevant supplier or suppliers of the part with a notification that demand for the part has changed. Preferably, the e-mail also includes a hyperlink to a demand schedule page such as is illustrated in Figure 13.

Referring to Figure 20, an order acknowledgement web page 2000 for the system includes a customer order number, customer contract number, order date and customer account number. A distributor's order number and distributor's order date are also displayed. The distributor may incorporate their logo at region 2002. Delivery information including a customer name and address and delivery terms are indicated in region 2004 and table 2006 provides details of the parts ordered, the customer requested and promised delivery dates, order quantity and total order value. A rubric at region 2008 provides further information such as a customer registration number and a reference to terms and conditions for the order. Corresponding information can also be delivered to the customer by e-mail for confirmation of placement of an order.

Preferably the "delivery to" area 2004 and part number and quantity for each item in table 2006 comprise hyperlinks to web pages which allow modification of the order details. Thus, clicking on the "delivery to" link allows a customer to change the delivery address for an item specified in the order. In a preferred embodiment a quantity of parts specified as a single item may be split by a customer into two separate items for delivery to different addresses, separate portions of the total quantity going to each address. Clicking on the ordered quantity allows a customer to specify a delivery schedule for the ordered quantity of parts, such as splitting the delivery into a plurality of separate deliveries to be made at specified time intervals. Preferably, however, the customer is not permitted to request delivery of parts before the guaranteed delivery date, to avoid the need to recalculate a delivery date at this stage. Clicking on the part number provides a customer with more detailed information about the selected part, for example, by linking to the product catalogue to provide a drawing and/or photograph of the part. Once the order details are to the customer's satisfaction, the customer may then confirm the order using confirm button 2010. After confirmation of the order a customer is no longer permitted to alter details of the order but instead must request alteration by the distributor's customer services department, for example, by e-mail.

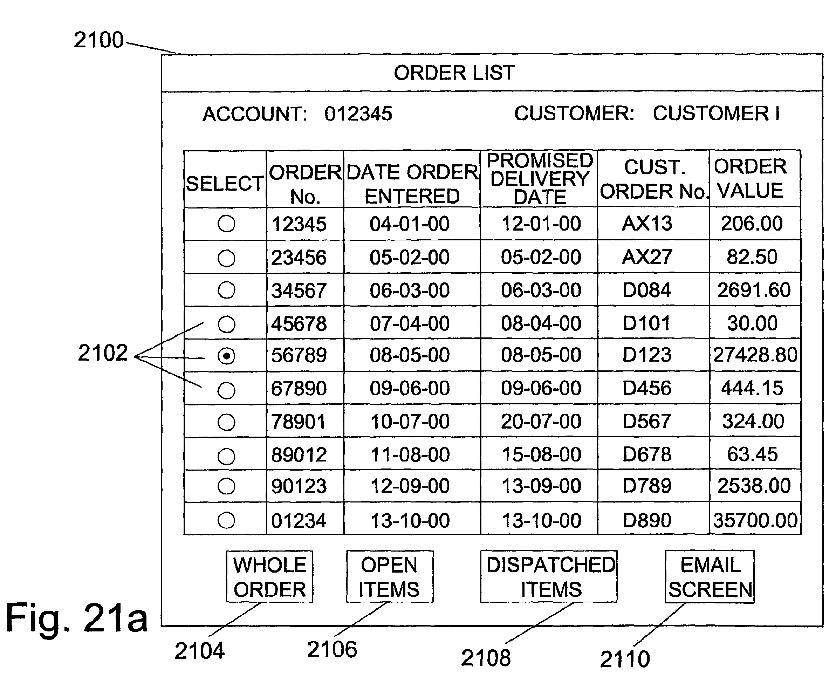

The customer also has access to detailed order information from customer main menu web page 1700, via order detail web pages 1702. Initially on selecting the order detail menu link 1702, a customer is presented with an order list web page 2100, as illustrated in Figure 21a. This web page presents a list of order numbers (excluding fully shipped orders), corresponding dates on which the order was entered into the system, promised delivery dates for the ordered parts, customer order numbers and order values. Radio buttons 2102 allow the selection of an individual order for more detailed viewing, or, alternatively, further details may be requested for all orders placed in the preceding twelve months by leaving all the radio buttons unselected. Order details are then obtained by clicking on one of a whole order button 2104 providing details of the whole order or an individually selected order, an open items button 2106 providing details of orders which have not yet been despatched, and a despatched items button 2108 providing details of orders for which some items have been despatched.

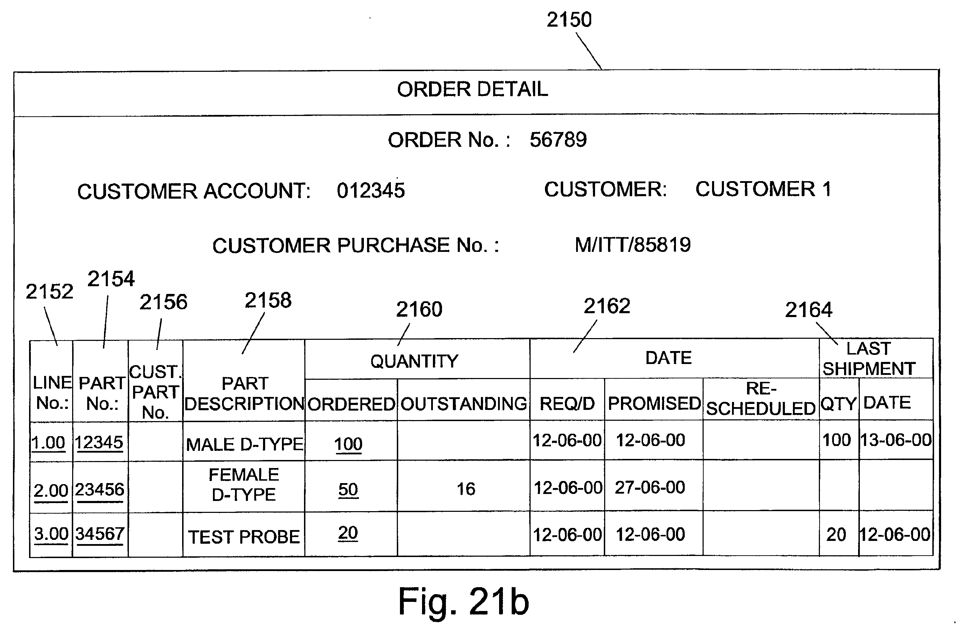

Once all the details have been requested, an order detail web page is received from web server 212 and displayed to the customer. Figure 21b shows an example of such an order detail web page 2150.

As illustrated, the web page includes basic order information such as an order number, customer account number, customer name, and customer purchase order number, as well as a table of information having a series of lines each identified by a line number 2152, each line providing details relating to an ordered part. Each line thus has a part number field 2154, a customer part number field 2156 (where a separate customer part number is stored in database 220), and a part description field 2158. Each line also has ordered and outstanding (i.e. remaining to be despatched) quantity fields 2160 and required, promised, and rescheduled date fields 2162 specifying required and promised dates for delivering the part specified in the order line; the rescheduled date field contains rescheduled delivery date information manually entered by the distributor's customer service department. Finally, each line has a last shipment field specifying a shipped quantity and shipped date for the relevant part.

The line number, part number, and ordered quantity fields 2152, 2154 and 2160 provide links to further, more detailed information relating to the order. Thus clicking on a line number 2152 provides details including, in a preferred embodiment, a shipping address and a shipping carrier and invoice number, and optionally, a link to the carrier's web site to allow the physical progress of the shipment to be tracked. Clicking on a part number 2154 provides information about a supplier's stock level for the selected part including, preferably, numbers of units of the part in stock at the supplier, in transit from the supplier to the distributor, in stock at the distributor, and under construction as work-in-progress at the supplier; a link to a demand graph for the part may also be provided. The work-in-progress information may be further expanded to provide details on the specific lots of part under manufacture and their corresponding due to stock date. This information is available to a customer because the e-procurement system has access to stock level data from a supplier of the part, including work-in-progress data, effectively in real time.

The order detail web page 2150 also allows a customer to request a change to the order, by clicking on an ordered quantity in field 2160. Each applicable field opens a web page with further customer information or options in a new window overlying the order detail web page. Clicking on ordered quantity field 2160 opens a order change request web page including the distributor's order number and other order details as illustrated in Figure 21b, together with a text message box in which a customer can enter a change request which is sent to the distributor's customer services department on pressing a "send" button. If a customer were permitted to directly modify an order which had been committed to database 220 there would be a risk that the customer's modification would have a detrimental effect on the timeliness with which the orders of other customers could be met. For this reason once an order is committed to database 220 it can only be changed manually by the distributor's customer services department who can manually determine the impact any change will have on the delivery of other orders. The demand graph described above provides a useful tool for the customer services department when considering the impact an amendment to an order will have. If the customer services department reschedules all or part of the order, a rescheduled date will appear in field 2162 of Figure 21b and an e-mail detailing the changes to the order will automatically be sent to the customer, generated by customer services application code (not shown in Figure 2) and processed as a batch job by e-mail server 214 in the usual way.

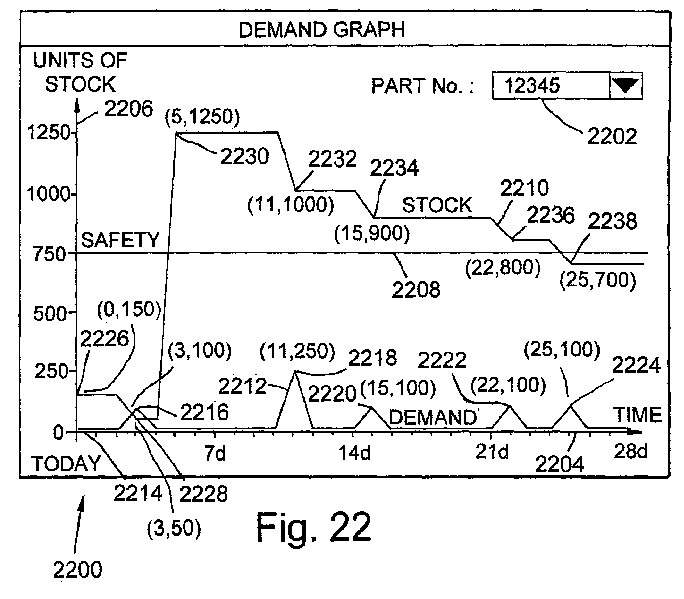

Referring now to Figure 22, this illustrates a first example of a planning tool 2200 for display on a supplier terminal as a demand graph web page 816. In one embodiment of the system the demand graph is accessible from a main menu web page as well as from hyperlinks provided on the supplier web pages described above, including the web pages for stock load 802, stock transfer 804, inventory by location 806, demand schedule 808, and parts look-up 814. Likewise similar demand graph web pages 1510 and 1706 are accessible from distributor and customer main menu web pages. A demand graph button is preferably also provided on other distributor and customer web pages described above, such as product information web pages 1704 and order entry web page 1708.

In more detail demand graph 2200 includes a drop-down list 2202 for selecting a number of a part provided by the supplier. A demand graph for the selected part is then presented to the supplier.

Referring in more detail to Figure 22, the demand graph has an x axis 2204 denoting time and a y axis 2206 denoting units of stock. The time axis preferably begins at a current time and/or date and covers a predetermined interval, in the illustrated embodiment, a period of four weeks from today's date. The graph has a curve 2212 showing a level of demand for the selected part corresponding, in a preferred embodiment, to the "Total Demand" column of demand schedule 1300 (although the values illustrated by demand graph 2200 have been selected to illustrate the demand graph principle rather than to correspond with the actual figures given in the example of the demand schedule illustrated in Figure 13). A second curve 2210 on demand graph 2200 shows a predicted stock level, as described in more detail below, and a third, optional curve 2208, shows a level of safety stock for the selected part which, as shown, will usually be flat.

To generate the demand graph data is read from database 220 either directly using demang graph application 226, or indirectly using one or more of applications 228 to 236, and sets of data values representing the graph points for each curve are prepared. In a prefered embodiment these data are then passed to web server 212 (or, in the system of Figure 1b, web server 154) where the graph itself is drawn. In such a web-based embodiment a Java applet such as a KavaChart (Trademark; code available from http://www.ve.com/kavachart/) may used to drawn the demand graph itself. The demand graph may be made available as a print-out.

In the illustrated embodiment of the demand graph the demand level and stock level are indicated by lines on the graph but other graphical representations can also be used. The demand graph may also include supplementary information such as one or more data items 1308 to 1320 as described with reference to Figure 13. The demand graph page may also include a table of data points used to construct curves 2210 and 2212 to facilitate reference to values of stock level and stock demand over the period displayed on the graph.

The predicted stock level at a date, as depicted in demand graph 2200 is determined by calculating a predicted total stock level at the date and subtracting a cumulative total demand at the date. The predicted total stock level at the date is calculated by adding the distributor's on-hand stock of the selected part, the supplier's on-hand stock, the in-transit stock, and any work-in-progress (WIP) due to stock by the specified date (see Figure 12 and the accompanying description). Preferably the addition does not take into account any work-in-progress which is overdue at the specified date, that is, work-in-progress which has not been (or will not be) completed by the date.

In the example shown in Figure 22 the safety stock level begins at "today" (day 0) at point 2226 with 150 units of stock. The initial demand, at point 2214, is zero. At day 3, there is a demand for 100 units of the part (point 2216) and the stock level falls to 50 units (point 2228). At day 5, an additional 1200 units of the part are predicted to be added to the stock level as a result of the completion of work-in-progress and thus the stock level at point 2230 is 1250 units. There is a demand for a further 250 units of stock at day 11 (point 2218 on demand curve 2212) and thus the stock level falls to 1000 units (point 2232 on stock level curve 2210). At day 15, there is a demand for a further 100 units of stock (point 2220) and the stock level falls to 900 units (point 2234); at day 22 there is a further demand for 100 units (point 2222) and the stock level falls to 800 units (point 2236). The safety stock level 2208 is constant at 750 units. At day 25 a further demand for 100 units of stock (point 2224) brings the stock level down to 700 units (point 2238), below the safety stock level. It can be seen that the falls in stock level essentially correspond to the integral of demand curve 2212.

The demand graph 2200 assists a supplier in planning their inventory management. Thus the demand graph allows a supplier to see, by simple inspection, whether and when the stock level of a part is predicted to fall below the safety stock level. The supplier can then take action in advance to correct this, for example, by ordering in or manufacturing additional stock. More importantly, a supplier can tell, by inspection, when the distributor is at risk of letting down a customer by not fulfilling an order: a peak in the demand curve 2212 which causes the stock level curve 2210 to cross the x-axis, i.e. to fall below 0 units of stock of the part, represents a customer order which it is predicted will not be met unless remedial action is taken (since the demand graph is primarily intended to provide an advance warning of a low stock level supplier-distributor part shipping time is not taken into account although, if more precise time predictions were required, the stock level calculation for a specified date could be carried out using supplier and WIP stock levels offset by the shipping delay). Inspection of demand graph 2200 also allows a supplier to estimate the effect of a batch of work-in-progress not being completed on time and, optionally, this may be incorporated into a tool to allow a supplier to view the effect on the demand graph of omitting a specified batch of work-in-progress from the stock level calculation.

In the above described embodiment, for most parts supplier-originating data is available to construct a demand graph as shown in Figure 22, but for some parts no supplier data is available. In other embodiments of the system for simplicity data may not be input by either a supplier or a manufacturer/distributor, but nevertheless the demand graph provides a useful, perhaps more useful, tool in the context of arrangements such as these, in which more limited data is available.

Therefore in preferred embodiments of the system a demand graph similar to that illustrated in Figure 22 may be constructed without using supplier-entered data where this is not available. Such a demand graph can be constructed using customer order data relating to orders for parts placed with the distributor by customers of the distributor, and distributor order data relating to purchase orders for parts placed by the distributor with suppliers of the parts. Thus, preferably, the customer order data comprises demand data for a part comprising a required quantity of the part and a due date by when that quantity is required, and, preferably, the distributor order data comprises purchase order data for a quantity of a part and a due date by when that quantity is required to be supplied by a supplier of the part.

Where supplier data is not available, a predicted stock level at a date may be calculated by adding to a current stock level held by the distributor, a total quantity of units of stock predicted to be provided to the distributor by purchase orders with suppliers at the date (excluding overdue purchase orders) and subtracting the cumulative customer demand for the stocked part at the date. This can be used for constructing a stock level curve corresponding to stock level curve 2210 of the demand graph 2200 of Figure 22. Overdue purchase orders are disregarded, or "zeroed", in a similar way to overdue work-in-progress, as described with reference to Figure 22. Optionally a safety level of stock at the distributor may also be included on the demand graph.

A demand graph constructed in this way still provides a useful advanced planning tool as, in a similar way to that described with reference to Figure 22, it enables a distributor or manufacturer to see at a glance where there is a risk of not meeting a customer order. The graphical representation of the distributor's stock level allows a distributor to quickly ascertain when (or whether) the stock level is predicted to fall below the safety stock level and when (or whether) the stock level is predicted to fall below zero.

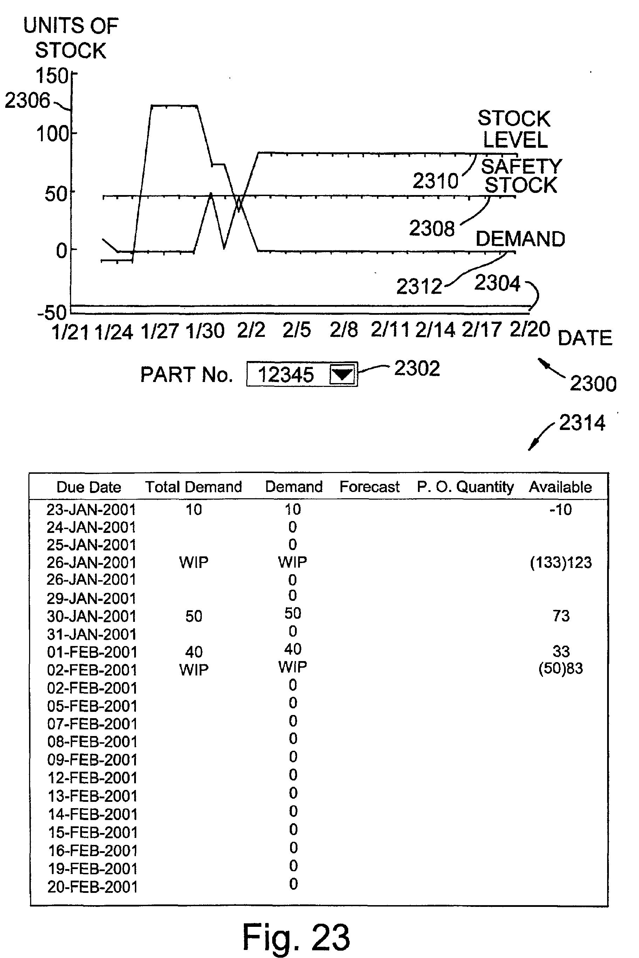

By way of illustration Figure 23 shows a second example of a demand graph planning tool 2300 together with a table of data used to generate the graph.

In Figure 23 a demand graph 2300 again graph has a part number field 2302 and an x axis 2304 denoting time (date), running from 21st January to 20th February, and a y axis 2206 denoting units of stock, running from -50 (notional) units to +150 units. Again three curves are shown, a safety stock level curve 2308, constant at approximately 50 units, a predicted stock level curve 2310 and a stock demand curve 2312. The values of the data points on the stock level and stock demand curves reflect the stock level and demand values in data table 2314.

Referring to demand graph 2300 and to table 2314, it can be seen that there is an initial demand, on 23 January, for 10 units of stock. It is apparent from the stock level curve 2310, which is below zero at this point, that this order has not been met. However on 26th January the stock level curve rises steeply to approximately 120 units and at this point the order for 10 units can be met. The reason for the rise in the number of units available can be found by inspecting data table 2314, and is due to the completion of work-in-progress (WIP) of 133 units; the stock level rises to 120 units to reflect the 10 units already allocated. An order (demand) for 50 units on 30th January reduces the predicted stock level 2310 on this date, and a further order for 40 units, due for delivery on 1st February, is predicted to take the stock level below the safety stock level. Thus either the supplier, or the distributor (or both) are provided with advance warning and are able to take remedial action to prevent the predicted problem from actually arising.

The demand graph may be provided with hyperlinks to allow a user to access the underlying data, such as the data in table 2314 and, if desired, further more detailed data.

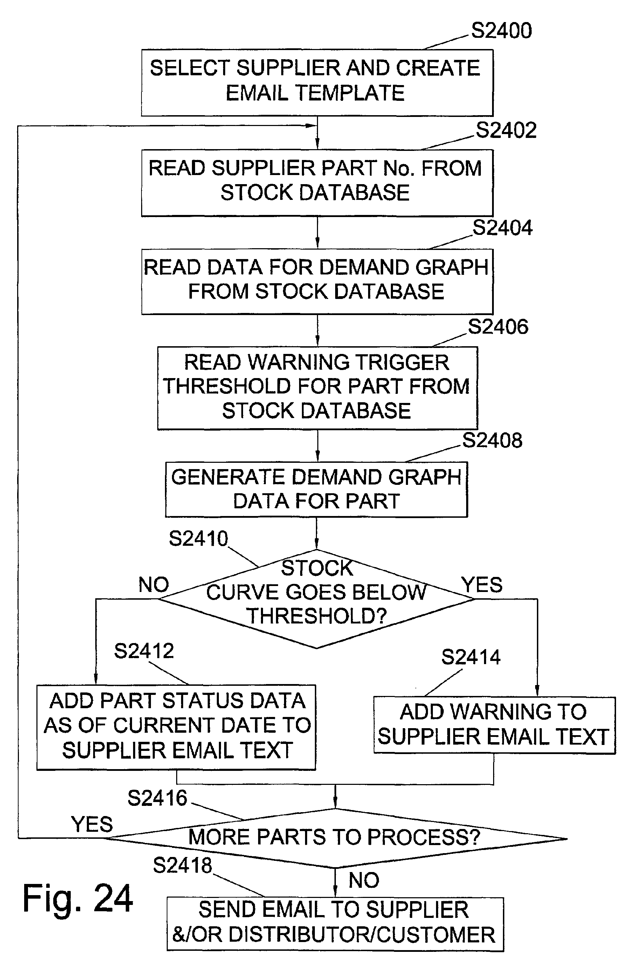

In a preferred embodiment the demand graph also incorporates a warning or trigger mechanism to display a warning or trigger further action when a problem is predicted to occur. In particular it is desirable to monitor for the predicted stock level of a part falling below the safety stock level or, more seriously, falling below zero (when customer orders may not be met). The warning may comprise a visual warning displayed with the demand graph or an e-mail to warning a supplier and/or customer and/or distributor with details of the predicted problem, or both. This is described in more detail with reference to Figure 24.

Figure 24 shows a flow diagram of monitoring process program code for monitoring a supplier's predicted stock levels and for providing advance email warning of potential problems. This procedure may be run, for example, as part of an overnight batch job with other monitoring tasks as described above.

Referring to Figure 24, at step S2400 a supplier is selected and an email template created for that supplier. Then, at step S2402, the program reads a first part number for the supplier from database 220 (or, in the embodiment of Figure 1b, stock database 160) and, at step S2404, reads the data relating to the part necessary to construct a demand graph as described above. At step 2406 a threshold stock predicted level value for the part, indicating a level at which a warning should be issued, is read from the database. Then, at step S2408 sets of data values representing the graph points for each required curve are prepared and, if necessary, interpolated or extrapolated to determine (step S2410) whether the predicted stock level falls below the threshold value in the period under consideration (normally a predetermined period such as 30 days from the current date).

If the predicted stock level does not fall below the threshold, at step S2412 status data for the part, such as current stock level and total predicted demand data, is added to the text of the supplier's email template.

If the predicted stock level does fall below the threshold a warning, preferably with details of the potential problem, is added to the supplier's email (step S2412). Preferably the warning includes details of the potential problem such as the supplier's part number, the date or time at which the problem is predicted to occur, and the nature of the problem, for example, the predicted number of units of stock below the threshold level.

Once the first part number has been processed the program determines, at step S2416, whether there are further part numbers to be processed for that supplier, and if there are loops back to step S2402. If all the part numbers relevant to that supplier have been processed the program proceeds to step S2418 where the email, now containing status and/or warning data for all relevant parts provided by the supplier, is despatched to the supplier. In some embodiments the email may be copied to or sent instead to the distributor or and/or customer(s). The program then ends or, in other embodiments, is run again to process data for parts provided by other suppliers.

The simplified type of demand graph described above can be used by a distributor or a manufacturer. When used by a manufacturer, internal work orders take the place of purchase orders and current stock at the manufacturer takes the place of current stock at the distributor. Where a manufacturer also has the option of buying in parts to meet an order they cannot themselves satisfy, a predicted stock level may be calculated by adding both units of stock predicted to be provided by purchase orders and units of stock predicted to be provided by manufacture in response to internal work orders.

The demand graph need not necessarily operate in the context of computer systems such as are illustrated in Figures 1b and 2 but may be implemented as a stand-alone application on a conventional personal computer similar to that illustrated in Figure 3. A simple demand graph application, however, still requires access to data for the above described predicted stock level calculation. This may either be read directly from a database, such as data storage 316 of Figure 3, or may be accessed remotely, for example, by means of internet interface device 300 (although internet access is not essential for the demand graph).

In the above described embodiments, the internet, and more specifically, web technology, is used for communication between a central computer system, the distributor or distributors, the supplier or suppliers, and the customers. However, it is not necessary to implement the invention on the internet and the system can be arranged to operate over other forms of network. The system may, for example, be implemented on local or wide area networks and/or wireless mobile communications networks such as networks employing wireless application protocol (WAP). Moreover, as is well known to those skilled in the art, the processing for performing the functions described above, may be shared between machines in ways other than that shown in the illustrated embodiment. Furthermore, although the system has been described in the context of managing the supply of stock items or parts comprising goods, these items may additionally or alternatively comprise services such as staff, equipment or facilities for hire.

It will be understood that the invention is not limited to the described embodiments and encompasses modifications apparent to those skilled in the art lying within the spirit and scope of the claims appended hereto.

## Claims

1. A data processing system comprising:
a stock level data store for storing stock level data for a stock item or part comprising current stock level data, stock demand data and stock replenishment data;
a program store storing code for a processor; and
a processor, coupled to the data store for accessing the stored data and coupled to the program store for implementing the stored program code;
the code comprising code for:
calculating predicted stock level data using the current stock level data, the stock replenishment data and the stock demand data, said predicted stock level data comprising a date and/or time and a predicted number of stock units available for meeting a demand for the stock item or part at said date and/or time; and
graphically outputting changes in the predicted stock level data over a future period of time.

2. A data processing system as claimed in claim 1 wherein the stock replenishment data comprises data indicating a number of units of the stock item or part and a due date and/or time at which the units are due to be available for meeting the demand for the stock item or part.

3. A data processing system as claimed in claim 2, wherein the stock replenishment data further comprises a predicted or actual date and/or time at which units of the stock item or part will be or are available for meeting the demand, and wherein said code for calculating said predicted stock level data disregards stock replenishment data elements for which the predicted or actual date and/or time is later than the due date and/or time.

4. A data processing system as claimed in any preceding claim wherein the code further comprises code for:
determining whether the predicted stock level for a stock item or part falls below a threshold level; and
transmitting a warning to a supplier of the stock item or part in response to the result of said determining.

5. A data processing system as claimed in claim 4 wherein the code further comprises code for:
determining a date and/or time at which the stock level for the item or part is predicted to fall below the threshold level; and
wherein said warning comprises warning data including said predicted date and/or time.

6. A data processing system as claimed in any preceding claim wherein the item or part is supplied from a supplier to a customer via an intermediary, wherein the stock demand data comprises customer demand data, and wherein the stock level data comprises stock level data relating to the levels of stock held by both the supplier and the intermediary.

7. A data processing system as claimed in claim 6 wherein the stock replenishment data includes replenishment data for work-in-progress at the supplier.

8. A supply management terminal for a manufacturer, distributor, customer and/or supplier, the terminal comprising:
means to retrieve from a data store stock level data for a stock item or part comprising current stock level data, stock demand data and stock replenishment data;
means to determine predicted stock level data using the current stock level data, the stock replenishment data and the stock demand data, said predicted stock level data comprising a date and/or time and a predicted number of stock units available for meeting a demand for the stock item or part at said date and/or time; and
means to graphically output, using the terminal, changes in the predicted stock level data over a future period of time.

9. A stock planning tool to graphically output predicted stock level changes over a period of time, the stock planning tool comprising:
computation means to calculate a predicted stock level at a future time by adding an initial stock level to a predicted cumulative additional stock level at the future time and subtracting a cumulative stock demand at the future time; and
graphing means, in communication with said computation means, for providing a graphical output of variations of said predicted stock level over time.

10. A stock planning tool as claimed in claim 9 wherein said predicted cumulative additional stock level comprises a sum of predicted stock level increases in consequence of stock purchase orders and/or stock manufacture orders.

11. A stock planning tool as claimed in claim 10 wherein said predicted cumulative additional stock level sum excludes stock level increases in consequence of stock purchase orders and/or stock manufacture orders which are overdue or predicted to be overdue.

12. A stock planning tools as claimed in any one of claims 9 to 11, wherein said graphical output includes an output of variations of stock demand over time.

13. A stock planning tools as claimed in any one of claims 9 to 12, wherein said graphical output includes an indication of a stock safety level.

14. A stock planning tools as claimed in any one of claims 9 to 13 wherein said graphical output comprises a line or bar graph.

15. An item or part supply planning method for assisting identification of a potential date and/or time at which there is a risk of a level of stock of the item or part falling below a threshold value, the method comprising:
reading initial stock level data from a data store, the initial stock level data comprising data indicating an initial stock quantity of the item or part;
reading customer demand data from a data store, the customer demand data comprising data indicating at least one order for a demanded quantity of the item or part and a corresponding date and/or time for meeting the order;
reading stock replenishment data from a data store, the stock replenishment data comprising data indicating at least one stock replenishment event increasing a stocked quantity of the item or part at a corresponding date and/or time;
calculating a cumulative item or part demand at a future data and/or time by summing demanded quantities data of the item or part preceding said future date/time;
calculating a cumulative stock level at a future data and/or time by summing said initial stock quantity and increases in stocked quantity of said item or part preceding said future date and/or time;
calculating a predicted level of stock by subtracting said cumulative item or part demand from said cumulative stock level;
repeating said predicted level of stock calculation for a plurality of different future dates and/or times; and
graphically outputting a plurality of predicted levels of stock for a corresponding plurality of different future dates and/or times.

16. A computer program to, when running, carry out the procedure of claim 15.

17. The computer program of claim 16 stored on a computer readable medium.
